(19) Europäisches Patentamt
European Patent Office
Office européen des brevets

(11) **EP 4 183 572 A1**

(12) **EUROPEAN PATENT APPLICATION**

(43) Date of publication:
**24.05.2023 Bulletin 2023/21**

(21) Application number: **21209821.4**

(22) Date of filing: **23.11.2021**

(51) International Patent Classification (IPC):
**B32B 7/10** (2006.01)     **B32B 27/08** (2006.01)
**B32B 27/30** (2006.01)     **B32B 27/32** (2006.01)
**C08J 5/18** (2006.01)

(52) Cooperative Patent Classification (CPC):
**B32B 7/10; B32B 27/08; B32B 27/30; B32B 27/32;**
B32B 2250/02; B32B 2250/05; B32B 2250/24;
B32B 2250/244; B32B 2270/00; B32B 2307/30;
B32B 2307/31; B32B 2307/40; B32B 2307/4023;
B32B 2307/406; B32B 2307/408;     (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Abu Dhabi Polymers Co. Ltd (Borouge) LLC
Abu Dhabi (AE)**
• **Borealis AG
1020 Vienna (AT)**

(72) Inventors:
• **Das, Subrata Kumar
Abu Dhabi (AE)**
• **Malmros, Peter
Abu Dhabi (AE)**
• **Singh, Raghvendra
Abu Dhabi (AE)**
• **Kinasih, Paulus Pandu
Abu Dhabi (AE)**
• **Thakor, Pavan Kumar
Abu Dhabi (AE)**

(74) Representative: **Kador & Partner Part mbB
Corneliusstraße 15
80469 München (DE)**

(54)     **POLYETHYLENE LAMINATES FOR SUSTAINABLE PACKAGING**

(57)     The invention relates to a polyethylene laminate film comprising an inner surface and an outer surface and comprising a print film comprising an outer layer E, a core layer F and an inner layer G, wherein the inner layer G forms the outer surface of the laminate film, and wherein the inner layer G is made of an inner layer G composition comprising a component AG, which is an ethylene copolymer having a density of 920 to 935 kg/m$^3$ and a melt flow rate (MFR$_2$) of 0.5 to 2.0 g/10min, determined according to ISO 1133; and a sealant film comprising an outer layer A, a core layer B and an inner layer C, wherein the inner layer C forms the inner surface of the laminate film, and wherein the inner layer C is made of an inner layer C composition comprising at least one ethylene polymer; wherein the outer layer A of the sealant film is laminated to the outer layer E of the print film, and wherein the seal initiation temperature (SIT) at 5 N of the outer surface of the laminate film is at least 10 °C higher than the seal initiation temperature at 5 N of the inner surface of the laminate film, the seal initiation temperature being determined according to ASTM F2029 and ASTM F88.

The invention further relates to an article comprising the polyethylene laminate film and to the use of polyethylene laminate film for packaging of an article. Moreover, the invention relates to a sealant film, an article comprising the sealant film and the use of the sealant film for packaging of an article.

EP 4 183 572 A1

(52) Cooperative Patent Classification (CPC): (Cont.)
B32B 2307/514; B32B 2307/54; B32B 2307/546;
B32B 2307/558; B32B 2307/72; B32B 2307/7242;
B32B 2307/732; B32B 2307/746; B32B 2307/75;
B32B 2439/70

**Description**

The present invention relates to a polyethylene laminate film comprising a print film and a sealant film. Further, the invention relates to an article comprising the polyethylene laminate film, and to the use of the polyethylene laminate film in packaging applications. The invention also relates to a sealant film and its use in packaging applications.

Laminated films are widely used for packaging applications. Conventional flexible packaging laminates comprise different polymer families such as e.g. polyesters (e.g. PET), polyamides or oriented polypropylenes (e.g. BOPP) as the print film and polyethylenes (PE) as the sealant film. Laminates are generally employed in the packaging industry to match multi-functional requirements from different films: sealant film for sufficient toughness-related properties to ensure package integrity without distortion and rupture; and substrate film for stiffness and barrier-related properties to ensure improved shelf life of packed goods and its subsequent handling and operation especially during packaging on Form, Fill & Seal (FFS) machines. Apart from excellent sealing performance, balanced behavior of impact strength (e.g. dart impact) and mechanical properties (e.g. stiffness, tensile strength) as well as good aesthetic performance (e.g. in terms of gloss and transparency) are desirable for sealant films. Substrates are laminated with polyethylene sealant films to provide superior stiffness, heat resistance, optical and barrier properties.

Recently, there has arisen a growing trend to provide "pure" polyethylene solutions, i.e. by laminating a polyethylene sealant film to a substrate also made of polyethylene. Based on a single class of resins, such laminates could be easily recycled by conventional methods and thus improve sustainability, and could also reduce productions costs by the use of the less expensive polyethylene polymers. However, it has been difficult to replace the conventional substrates by using polyethylene substrates due to insufficient stiffness and inferior heat resistance which may not be adequate to sustain the higher packaging speed on the Vertical Form Fill Sealing (VFFS) line and to withstand higher temperature of the top sealing jaws. As "pure" polyethylene solutions usually tend to have inferior stiffness, heat resistance and barrier performance, their use in various FFS machine and also for different end-use applications is challenging. It is a huge challenge to produce a full-PE laminates with the required properties to facilitate a smoothly run on a high speed VFFS packaging machines where higher heat resistance is essential to avoid film sticking issue on the sealing jaws. Thus, although "pure" polyethylene laminates are known, there is a steady need to further improve the performance of such laminates, in particular when the substrate is produced as a non-oriented PE film.

WO 2018/187438 describes a laminate structure for packaging comprising a sealant film and a layered print film with a thickness from 15 to 30 microns. The middle layer of print film comprises at least 90% by weight of a high density polyethylene (HDPE) having a density from 0.950 to 0.965 g/cm$^3$ and a melt index (12) from 0.1 to 20 g/10 min, and both the inner and outer layer comprise linear low density polyethylene (LLDPE) having a density from 0.925 to 0.965 g/cm$^3$. No details on the SIT, optical properties and mechanical properties are disclosed in this publication, neither for the print film nor for the laminate structure.

It is therefore an object of the present invention to provide polyethylene laminate films, preferably produced from regular non-oriented blown or cast films, which have good or even improved heat resistance and mechanical properties and thus show excellent performance in high speed VFFS operations, and at the same time show excellent sealing performance.

It is a further object of the present invention to provide polyethylene laminate films with good barrier properties, preferably without the use of additional barrier coating (e.g. metalizing) procedures, which are required for the intended use of the laminate films in packaging applications, where particularly moisture barrier is important.

It is a still further object of the present invention to provide polyethylene laminate films, which also suffice the aesthetic requirements addressed on films in packaging applications and have good optical properties (e.g. gloss and haze).

Finally, it is also an object of the present invention to provide polyethylene laminate films comprising print films with the required properties (mechanical and heat resistance) for high-speed printing operations and subsequent performance on the packaging line.

The combination of these objects is achieved by the present invention, which provides a polyethylene laminate film comprising an inner surface and an outer surface and comprising:

a) a print film comprising an outer layer E, a core layer F and an inner layer G, wherein the inner layer G forms the outer surface of the laminate film, and wherein the inner layer G is made of an inner layer G composition comprising a component AG, which is an ethylene copolymer having a density of 920 to 935 kg/m$^3$ and a melt flow rate (MFR$_2$) of 0.5 to 2.0 g/10min, determined according to ISO 1133; and

b) a sealant film comprising an outer layer A, a core layer B and an inner layer C, wherein the inner layer C forms the inner surface of the laminate film, and wherein the inner layer C is made of an inner layer C composition comprising at least one ethylene polymer;

wherein the outer layer A of the sealant film is laminated to the outer layer E of the print film, and wherein the seal initiation temperature (SIT) at 5 N of the outer surface of the laminate film is at least 10 °C higher than the seal initiation temperature at 5 N of the inner surface of the laminate film, the seal initiation temperature being determined according to ASTM F2029 and ASTM F88.

The present invention is based on the finding that such polyethylene laminate films can be provided by a combination of a print film and a sealant film, wherein the inner layer of the print film comprises a specifically selected ethylene polymer and the heat resistance properties of the external layers of the laminate film are specifically adjusted.

The combination of the inner layers of the print film and sealant film in a polyethylene laminate films according to the present invention solves the above objects.

The difference in the seal initiation temperature between the two external surfaces of the laminate film of at least 10 °C and very good mechanical properties achieve that the laminate films may be run at a packaging speed of 50 to 80 pouches/min without any jaw-sticking issue at sealing bars in the VFFS line, while excellent sealing behavior is reached.

Excellent barrier properties are achieved in the laminate films without using any barrier coating or metallization, why the laminate films may be used for the majority of packaging applications without any recyclability issues, where particularly moisture barrier is most important.

Although it is quite challenging to increase the heat resistance of polyethylene films, while maintaining good optical properties, the laminate films are also characterized by relatively high gloss and low haze. Thus, the polyethylene laminate films according to the present invention combine all properties desired for laminate films for use in packaging applications.

Further, the print films of the laminate films may easily be run on high speed printing machines.

In the present invention, the polyethylene laminate film comprises, or consists of, a sealant film and a print film.

**Print Film**

Structure

The expression "print film" denotes a film that comprises a layer that is usable for printing operations (such as high speed printing processes). The film may be a non-printed or printed film.

The print film according to the present invention comprises, or consists of, several layers, and at least an outer layer E, a core layer F and an inner layer G. The core layer F is located between the external layers, i.e. the outer layer E and the inner layer G. Preferably, the outer layer E of the print film is the printable or printed layer, i.e. printing may be performed on the outer layer E of the print film, preferably after surface treatment (corona treatment).

The print film also functions as a substrate (film) and contributes to mechanical and/or optical properties of the laminate film. Thus, the wording "print film" and "substrate film" or "substrate" are used synonymously in this disclosure. When laminated to the sealant film, the inner layer G forms the outer surface of the laminate film.

In one embodiment, the print film consists of an outer layer E, a core layer F and an inner layer G. In another embodiment, the print film comprises one or more further intermediate (or sub-skin) layers Y.

In a particular embodiment, the print film further comprises one or more intermediate layer(s) Y between the core layer F and the inner layer G, and the core layer F and the outer layer E, for example in a five-layer film structure E/Y1/F/Y2/G or a seven-layer film structure E/Y1/Y1/F/Y2/Y2/G. Preferably, the print film comprises up to nine layers, more preferably up to seven layers.

If present, the intermediate layer(s) Y preferably comprise(s), or consist(s) of, a composition similar to the composition of its neighboring layer, which may thus be a composition of the core layer F or either of a composition of the neighboring inner layer G or the neighboring outer layer E.

Preferably, the print film has a thickness of 15 to 40 μm, more preferably of 20 to 38 μm, most preferably of 22 to 35 μm.

Preferably, the core layer F has a thickness of 30 to 80 %, more preferably 35 to 75 % and most preferably 40 to 70 % of the total print film thickness.

The outer layer E and/or the inner layer G preferably each has/have a thickness of 10 to 35 % of the total film thickness, more preferably 15 to 30 %, such as 25 %, of the total print film thickness. In a five-layer film structure E/Y1/F/Y2/G, the inner layer G and/or the outer layer E preferably each has/have a thickness of 5 to 25 % of, more preferably of 7.5 to 20 %, of the total print film thickness.

Preferably, the print film is a "polyethylene film", i.e. a film that comprises, or consists of, at least one type of ethylene polymer, which may be a homopolymer or a copolymer of ethylene. Preferably, the polyolefin film comprises at least 90 wt.%, more preferably at least 95 wt.% and most preferably at least 98 wt.% of ethylene polymer, based on the total weight of the polyethylene film. Preferably, the polyethylene film comprises from 90 to 100 wt.%, more preferably from 95 to 100 wt.% and most preferably from 98 to 100 wt.% of ethylene polymer, based on the total weight of the polyethylene film. Most preferably, the polyethylene film consists of only ethylene polymer(s). Preferably, ethylene polymer comprises, or consists of, ethylene homopolymer and/or copolymer of ethylene with propylene and/or any of alpha-olefins having from 4 to 10 carbon atoms. Preferably, the polyethylene film does not contain non-polyolefin polymers, more preferably does not contain non-polyethylene polymers. Particularly preferred, the polyethylene film does not contain polyester or polyamide polymers. Use of polyethylene films enables the provision of fully recyclable and sustainable packaging structures.

Generally, print films may be provided as oriented or non-oriented films. An oriented film is a film that has been "stretched" after its production. Oriented films are typically stretched by more than 300%, in the machine direction (MD) and/or transverse direction (TD), preferably by 500% and more. Films stretched in machine direction are often referred to as "MDO" films. Films stretched in two directions are referred to as "bi-axially oriented polyethylene" ("BOPE") films. A non-oriented film is a blown or cast film, which is not intentionally stretched after the film production (preferably, by more than 200%) by any suitable means i.e. subsequent heating and/or using the rollers during the film production.

Preferably, the print film is a non-oriented film. Preferably, the print film is produced on standard blown and/or cast film line through the standard film machine system (nip roller or take-off rollers and winders), without the use of any stretching units.

As is understood within the meaning of this disclosure, the print film and its respective layer compositions for layer preparation may also comprise additives such as stabilizers, processing aids and/or pigments. Examples of such additives are antioxidants, UV stabilizers, acid scavengers, nucleating agents, anti-block agents, slip agents etc. as well as polymer processing agents (PPA). The additives may be present in some or only in one layer of the film, in the same or in different contents. The additives may be added to the respective layer compositions during preparation of the compositions or may already be contained in any of the polymers used for the preparation of the respective layer compositions.

Generally, each of the additives may be present in an amount of 0 to 5000 ppm, based on the total weight of the respective layer composition used for the preparation of the layers of the film. The additives are generally available from several suppliers and are contained in compositions as single additive or as admixtures of two or more additives. Such compositions may generally be present in an amount of 0 to 5 wt.% in the layer composition(s), based on the weight of the respective layer composition used for the preparation of the layers of the film.

Generally, within the meaning of the present disclosure, the percentage (%) is to be understood as weight percentage (wt.%), unless otherwise indicated.

Composition

Each of the print film layers is made of a composition comprising at least one polymeric (e.g. polyethylene) component. If the composition comprises more than one polymeric component, it is a blend of these components. Additional compounds (such as additives like polymer processing aids, anti block or slip agents) may be present in the composition.

### Inner Layer G

The inner layer G is made of an inner layer G composition comprising components, which particularly contribute to heat resistance and optical properties of the film. Further, this layer also imparts mechanical properties to the film.

When laminated to a sealant film, the inner layer G forms the outer surface of the laminate film. Good optical properties are important for this layer, as a print film is generally reverse printed on the outer layer while used in a laminate film.

The selection of the ethylene polymer(s) for the inner layer enables to produce a print film, which is ideal for high speed printing operations, particularly for more than 200 meters/min printing speed.

### Component AG

The inner layer G of the print film is made of an inner layer G composition comprising a component AG, which is an ethylene copolymer having a density of 920 to 935 $kg/m^3$ and a melt flow rate ($MFR_2$) of 0.5 to 2.0 g/10min, determined according to ISO 1133.

Generally, ethylene polymers may be unimodal or multimodal, for example bimodal. By the "modality" of a polymer is meant the structure of the molecular weight distribution of the polymer, i.e. the appearance of the curve indicating the number of molecules as a function of the molecular weight. If the curve exhibits one maximum, the polymer is referred to as "unimodal", whereas if the curve exhibits a very broad maximum or two or more maxima and the polymer consists of two or more fractions, the polymer is referred to as "bimodal", "multimodal" etc. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In the production of unimodal ethylene polymers, an ethylene polymer is produced in a reactor under certain conditions with respect to monomer composition, hydrogen gas pressure, temperature, pressure, and so forth. As comonomer, use is commonly made of other olefins having up to 12 carbon atoms, such as alpha-olefins having 3 to 12 carbon atoms, e.g. propene, 1-butene, 4-methyl-1-pentene, 1-hexene, 1-octene, 1-decene, etc., in the copolymerization of ethylene.

In the production of for example a bimodal ethylene polymer, a first ethylene polymer is produced in a first reactor under certain conditions with respect to monomer composition, hydrogen gas pressure, temperature, pressure, and so forth. After the polymerization in the first reactor, the reaction mixture including the polymer produced is fed to a second reactor, where further polymerization takes place under other conditions. Usually, a first polymer of high melt flow rate (low molecular weight) and with a moderate or small addition of comonomer, or no such addition at all, is produced in the first reactor, whereas a second polymer of low melt flow rate (high molecular weight) and with a greater addition of comonomer is produced in the second reactor. The resulting end product consists of an intimate mixture of the polymers from the two reactors, the different molecular weight distribution curves of these polymers together forming a molecular weight distribution curve having a broad maximum or two maxima, i.e. the end product is a bimodal polymer mixture.

Preferably, the component AG is a multimodal ethylene copolymer, more preferably a bimodal ethylene copolymer, and even more preferably a copolymer of ethylene and at least two different C4 to C12 alpha-olefin monomers, i.e. a terpolymer.

Preferably, the multimodal terpolymer comprises, or consists of, a multimodal polymer of ethylene with at least two different comonomers selected from alpha-olefins having from 4 to 10 carbon atoms, which has a ratio $MFR_{21}/MFR_2$ of 13 to 30 and an MWD of 6 or less.

Such multimodal ethylene terpolymers are disclosed, for example, in WO 2016/083208. As far as definitions (such as for the "modality" of a polymer) and production methods for these ethylene terpolymers are concerned it is referred to WO 2016/083208. Furthermore, all embodiments and preferred embodiments of such ethylene terpolymers as described in 2016/083208 having the required density are also preferred embodiments of the multimodal ethylene terpolymer of component AG in the present invention, whether or not explicitly described herein.

The multimodal ethylene terpolymer preferably has an $MFR_2$ in the range of from 0.5 to 2.5 g/10min, and particularly preferred 1.0 to 1.8 g/10min. Preferably, the multimodal ethylene terpolymer has a density of above 922 to 933 kg/m$^3$, more preferably of 923 to 930 kg/m$^3$. The multimodal ethylene terpolymer preferably has a ratio $MFR_{21}/MFR_2$ of 13 to 30, more preferably of 15 to 25.

The at least two alpha-olefin comonomers having from 4 to 10 carbon atoms of the multimodal ethylene terpolymer are preferably 1-butene and 1-hexene. Preferably, the total amount of comonomers present in the multimodal ethylene terpolymer is of 0.5 to 10 mol%, preferably of 1.0 to 8 mol%, more preferably of 1.0 to 5 mol%, more preferably of 1.1 to 4.0 mol%.

The multimodal ethylene terpolymer, which preferably is a bimodal terpolymer, preferably comprises, or consists of, an ethylene polymer component (A1) and an ethylene polymer component (B1), wherein the ethylene polymer component (A1) has higher $MFR_2$ than the ethylene polymer component (B1).

More preferably, the ethylene polymer component (A1) has an $MFR_2$ of 1 to 50 g/10 min, preferably of 1 to 40 g/10 min, more preferably of 1 to 30 g/10 min, more preferably of 2 to 20 g/10 min, more preferably of 2 to 15 g/10 min, and even more preferably of 2 to 10 g/10 min.

The ratio of the $MFR_2$ of ethylene polymer component (A1) to the $MFR_2$ of the ethylene polymer component (B1) is 2 to 50, preferably 5 to 40, more preferably 10 to 30, even more preferably 10 to 25, and still more preferably 11 to 25.

Preferably, the ethylene polymer component (A1) comprises a different comonomer than the ethylene polymer component (B1). Preferably, the ethylene polymer component (A1) has lower amount (mol%) of comonomer than the ethylene polymer component (B1), more preferably, the ratio of [the amount (mol%) of alpha-olefin comonomer having from 4 to 10 carbon atoms comonomer present in the ethylene polymer component (A1)] to [the amount (mol%) of at least two alpha-olefin comonomers having from 4 to 10 carbon atoms of the final multimodal polymer of ethylene ] is of 0.2 to 0.6, preferably of 0.25 to 0.5.

Preferably, the alpha-olefin comonomer having from 4 to 10 carbon atoms of the ethylene polymer component (A1) is 1-butene and the alpha-olefin comonomer having from 4 to 10 carbon atoms of the ethylene polymer component (B1) is 1-hexene. It is especially preferred that the bimodal terpolymer is prepared in a two or more stage polymerization in which the lower alpha-olefin comonomer (e.g. 1-butene) is incorporated by a slurry polymerization in a loop reactor and in which the higher alpha-olefin comonomer (1-hexene) is incorporated by a gas phase polymerization in a gas phase reactor.

Preferably, the ethylene polymer component (A1) has different, preferably higher, density than the density of the ethylene polymer component (B1). The density of the ethylene polymer component (A1) is preferably 925 to 950 kg/m$^3$, more preferably 930 to 945 kg/m$^3$.

Preferably, the multimodal ethylene terpolymer comprises the ethylene polymer component (A1) in an amount of 30 to 70 wt.%, preferably of 40 to 60 wt.%, more preferably of 35 to 50 wt.%, more preferably 40 to 50 wt.% and the ethylene polymer component (B1) in an amount of 70 to 30 wt.%, preferably of 60 to 40 wt.%, more preferably of 65 to 50 wt.%, more preferably 60 to 50 wt.%, based on the total amount (100 wt.%) of the polymer of ethylene.

Most preferably, the multimodal ethylene terpolymer consists of the ethylene polymer components (A1) and (B1) as the sole polymer components. Accordingly, the split between ethylene polymer component (A1) to ethylene polymer component (B1) is of (30 to 70):(70 to 30) preferably of (40 to 60):(60 to 40), more preferably of (35 to 50):(65 to 50), more preferably of (40 to 50):(60 to 50).

In a particularly preferred embodiment, the multimodal terpolymer is a bimodal terpolymer, i.e. comprises a low molecular weight and a high molecular weight component, and has an MFR$_2$ of 1.0 to 1.8 g/10 min, and/or an MFR$_5$ of 2.8 to 4.5 g/10 min, and/or an MFR$_{21}$ of 20 to 36 g/10 min, and/or a density of above 925 to 929 kg/m$^3$, and/or a molecular weight distribution (M$_w$/M$_n$) of 3.0 to 5.0, and/or an M$_n$ of 15 to 25 kg/mol, and/or an M$_w$ of 70 to 125 kg/mol, and/or an MFR21/MFR2 ratio (FRR$_{21/2}$) of 15 to 25, and/or an MFR$_{21}$/MFR$_5$ ratio (FRR$_{21/5}$) of 6 to 9. All molecular weight parameters are determined by the GPC conventional method in standard calibration as further described in detail below.

As the AG component, the resin Anteo™ FK2715 as produced by Borealis or Borouge may be used.

Preferably, the component AG is present in an amount of 40 to 80 wt.%, more preferably 50 to 75 wt.% and most preferably 55 to 70 wt.%, in the inner layer G composition, based on the total weight of the inner layer G composition.

In addition to the component AG, the inner layer G composition may comprise further components, which are different from the component AG.

*Component BG1 and BG2*

The inner layer G composition may further comprise a component BG1 and/or BG2.

Preferably, the component BG1 is a linear low density ethylene polymer (LLDPE) having a density of 915 to 930 kg/m$^3$ and a melt flow rate (MFR$_2$) of 0.05 to 1.0 g/10 min, determined according to ISO 1133.

Such LLDPEs are well known in the art and are usually produced in polymerization processes using a catalyst. The LLDPE of component BG1 preferably is a multimodal LLDPE, more preferably bimodal LLDPE. Such multimodal LLDPEs and their production are, for example, described in WO 2004/000933 A1, p. 9 to 12 to which it is referred.

The LLDPE of component BG1 preferably has a density of 920 to 928 kg/m$^3$, more preferably of 920 to 925 kg/m$^3$.

Preferably, the LLDPE of component BG1 is an ethylene copolymer. The comonomer can be alpha-olefins having 4 to 12 carbon atoms, e.g. 1-butene, 4-methyl-I-pentene, 1-hexene, 1-octene, 1-decene. More preferably, the LLDPE is a copolymer of ethylene and 1-butene or 1-hexene, most preferably is a copolymer of ethylene and 1-butene.

Preferably, the total amount of comonomers present in the LLDPE of component BG1 is of 2.0 to 6.0 mol%, more preferably of 2.5 to 5.5 mol%, and most preferably 3.0 to 5.2 mol%.

Preferably, the LLDPE of component BG1 has an MFR$_2$ of 0.1 to 0.5 g/10 min, more preferably of 0.15 to 0.4 g/10min, and most preferably 0.20 to 0.30 g/10 min.

The component BG1 preferably has a lower density and/or a lower melt flow rate (MFR$_2$) than the component AG.

In a particularly preferred embodiment, the LLDPE of component BG1 has an MFR$_2$ of 0.20 to 0.30 g/10 min, and/or an MFR$_5$ of 0.80 to 1.2 g/10 min, and/or an MFR$_{21}$ of 18 to 26 g/10 min, and/or a density of 920 to 925 kg/m$^3$, and/or a molecular weight distribution (MWD) of 10 to 24, and/or an M$_n$ of 10 to 15 kg/mol, and/or an M$_w$ of 150 to 250 kg/mol, and/or an MFR$_{21}$/MFR$_2$ ratio (FRR$_{21/2}$) of 80 to 110, and/or an MFR$_{21}$/MFR$_5$ ratio (FRR$_{21/5}$) of 18 to 26. All molecular weight parameters are determined by the GPC conventional method in standard calibration as further described in detail below.

As the LLDPE of component BG1, resin Borstar FB2230 or FB2235 as produced by Borealis or Borouge may be used.

Preferably, the component BG2 is a high density ethylene polymer (HDPE) having a density of 950 to 970 kg/m$^3$ and a melt flow rate (MFR$_2$) of 0.2 to 2.0 g/10 min, determined according to ISO 1133.

HDPEs are well known in the art and are usually produced in polymerization processes using a catalyst.

The HDPE of component BG2 preferably is a multimodal HDPE, more preferably a bimodal HDPE.

The HDPE of component BG2 preferably has a density of 955 to 968 kg/m$^3$, more preferably of 958 to 965 kg/m$^3$. Such multimodal HDPE and their production are, for example, described in WO 2020/109289, p. 19 to 28, to which it is referred.

Preferably, the HDPE is a copolymer. An ethylene copolymer is a polymer which comprises an ethylene monomer and one or more comonomer(s). The comonomer can be alpha-olefins having 4 to 12 carbon atoms, e.g. 1-butene, 4-methyl-1-pentene, 1-hexene, 1-octene, 1-decene. More preferably, the HDPE is a copolymer of ethylene and 1-butene, 1-hexene or 1-octene, most preferably is a copolymer of ethylene and 1-butene.

Preferably, the total amount of comonomers present in the HDPE is of 0.0 to 0.40 mol%, more preferably of 0.01 to 0.30 mol% and most preferably 0.02 to 0.20 mol%.

Preferably, the HDPE of component BG2 has an $MFR_2$ of 0.25 to 1.8 g/10 min, more preferably 0.3 to 1.5 g/10 min, still more preferably 0.4 to 1 g/10 min and most preferably 0.5 to 0.9 g/10 min.

In a particularly preferred embodiment, the HDPE of component BG2 has an $MFR_2$ of 0.5 to 0.9 g/10 min, and/or an $MFR_5$ of 2.0 to 3.5 g/10 min, and/or an $MFR_{21}$ of 30 to 50 g/10 min, and/or a density of 958 to 965 kg/m³, and/or a molecular weight distribution (MWD) of 10 to 15, and/or an $M_n$ of 7 to 12 kg/mol, and/or an $M_w$ of 100 to 165 kg/mol, and/or an $MFR_{21}/MFR_2$ ratio ($FRR_{21/2}$) of 50 to 75, and/or an $MFR_{21}/MFR_5$ ratio ($FRR_{21/5}$) of 10 to 25. All molecular weight parameters are determined by the GPC conventional method in standard calibration as further described in detail below.

As the HDPE of component BG2, resin Borstar FB5600 as produced by Borouge may be used.

Preferably, the component BG1 and/or BG2 is present in an amount of 15 to 45 wt.%, more preferably 20 to 40 wt.%, in the inner layer G composition, based on the total weight of the inner layer G composition.

*Component CG*

The inner layer G composition may further comprise a component CG. Preferably, the component CG is a low density ethylene polymer (LDPE), more preferably an LDPE having a density in the range of 918 kg/m³ to 928 kg/m³ and a melt flow rate ($MFR_2$) in the range of 1.5 to 2.5 g/10 min, determined according to ISO 1133.

LDPEs are well known in the art and are produced in high pressure processes usually performed in a tubular reactor or an autoclave.

LDPEs and their production are, for example, described in WO 2017/055174, page 9, line 29 to page 12, line 6, to which it is referred.

The LDPE of component CG preferably has a density of 918 to 928 kg/m³, more preferably of 919 to 927 kg/m³, and most preferably of 920 to 925 kg/m³.

Preferably, the LDPE of component CG has an $MFR_2$ of 1.6 to 2.4 g/10 min.

In a particularly preferred embodiment, the LDPE of component CG has an $MFR_2$ of 1.6 to 2.4, and/or a density of 920 to 925 kg/m³, and/or an MWD of 5.5 to 9, and/or an $M_n$ of 12 to 18 kg/mol, and/or an $M_w$ of 80 to 130 kg/mol. All molecular weight parameters are determined by the GPC viscosity method in standard calibration as further described in detail below.

As the LDPE of component CG, resin FT6230 or FT6236 as produced by Borealis or Borouge may be used.

Preferably, the component CG is present in an amount of 5 to 15 wt.%, more preferably 7 to 13 wt.%, in the inner layer G composition, based on the total weight of the inner layer G composition.

In one embodiment, the inner layer G composition comprises, or consists of, the components AG and BG1 and optionally CG in any of the above-described embodiments.

In another embodiment, the inner layer G composition comprises, or consists of, the components AG and BG2 and optionally CG in any of the above-described embodiments.

In a further embodiment, the inner layer G composition comprises, or consists of, the components AG, BG1 and BG2 and optionally CG in any of the above-described embodiments.

In a preferred embodiment, the inner layer G composition comprises, or consists of, the component AG in an amount of 50 to 75 wt.%, any one of the component BG1 or BG2 in an amount of 25 to 40 wt.% and optionally the component CG in an amount of 0 to 15 wt.%, based on the total weight of the inner layer G composition.

Generally, the component AG is responsible for the relatively high seal initiation temperature and good optical properties of the print film. The components BG1 and BG2 further contribute to high seal initiation temperature without affecting the optical properties of the print film.

### Core Layer F

The core layer F of the print film is made of a core layer F composition comprising components, which particularly contribute to stiffness of the film necessary for film extrusion processes and further for printing operations, in particular high-speed printing operations.

*Component AF*

The core layer F composition may comprise a component AF. Preferably, the component AF is a high density ethylene polymer (HDPE), preferably having a density in the range of 950 to 970 kg/m³ and a melt flow rate ($MFR_2$) in the range of 0.2 to 2.0 g/10 min, determined according to ISO 1133, as described for the component BG2 of the inner layer G composition.

All embodiments described for the component BG2 are embodiments of the component AF. The component AF may be selected from anyone of these embodiments independently, and the selected embodiment may be the same or different for AF and BG2.

Preferably, the component AF is present in an amount of up to 90 wt.%, preferably in an amount of 50 to 90 wt.%, more preferably 60 to 88 wt.% and most preferably 70 to 87 wt.%, in the core layer F composition, based on the total weight of the core layer F composition.

The component AF imparts strong high stiffness to the print film.

*Component BF*

The core layer F composition may comprise a component BF. Preferably, the component BF is an ethylene copolymer, preferably having a density of 920 to 935 kg/m$^3$ and a melt flow rate (MFR$_2$) of 0.5 to 2.0 g/10 min, determined according to ISO 1133, as described for the component AG of the inner layer G composition.

All embodiments described for the component AG are embodiments of the component BF. The component BF may be selected from anyone of these embodiments independently, and the selected embodiment may be the same or different for BF and AG.

Preferably, the component BF is present in an amount of 5 to 40 wt.%, more preferably 10 to 35 wt.%, in the core layer F composition, based on the total weight of the core layer F composition.

In one embodiment, the core layer F is made of a core layer F composition comprising, or consisting of, the components AF and BF, selected from any of the embodiments as described above.

In a preferred embodiment, the component AF is present in an amount of 50 to 90 wt.%, more preferably 70 to 87 wt.%, and the component BF is present in an amount of 10 to 50 wt.%, preferably 13 to 30 wt.%, in the core layer F composition, based on the total weight of the core layer F composition.

*Outer Layer E*

The outer layer E of the print film is made of an outer layer E composition comprising components, which particularly contribute to heat resistance and mechanical and optical properties of the film. The outer layer E is preferably the printed or printable layer of the film. In the laminate film, the outer layer E may be disposed between the core layer F and the outer layer A of the sealant film.

*Component AE*

The outer layer E composition may comprise a component AE. Preferably, the component AE is an ethylene copolymer, preferably having a density of 920 to 935 kg/m$^3$ and a melt flow rate (MFR$_2$) in the range of 0.5 to 2.0 g/10 min, determined according to ISO 1133, as described for the component AG of the inner layer G composition.

All embodiments described for the component AG are embodiments of the component AE. The component AE may be selected from anyone of these embodiments independently, and the selected embodiment may be the same or different for AE and AG.

In one embodiment, the components AE and AG and optionally BF are identical.

Preferably, the component AE is present in an amount of 40 to 80 wt.%, more preferably 50 to 75 wt.% and most preferably 55 to 70 wt.%, in the outer layer E composition, based on the total weight of the outer layer E composition

*Component BE*

The outer layer E composition may comprise a component BE. Preferably, the component BE is a linear low density ethylene polymer (LLDPE), more preferably having a density of 915 to 930 kg/m$^3$ and a melt flow rate (MFR$_2$) of 0.05 to 1.0 g/10 min, determined according to ISO 1133, as described for the component BG1 of the inner layer G composition.

All embodiments described for the component BG1 are embodiments of the component BE. The component BE may be selected from anyone of these embodiments independently, and the selected embodiment may be the same or different for BE and BG1.

Preferably, the component BE is present in an amount of 15 to 40 wt.%, more preferably 20 to 40 wt.%, in the outer layer E composition, based on the total weight of the outer layer E composition.

*Component CE*

The outer layer E composition may comprise a component CE. Preferably, the component CE is a low density ethylene polymer (LDPE), preferably having a density in the range of 918 kg/m$^3$ to 928 kg/m$^3$ and a melt flow rate (MFR$_2$) in the range of 1.5 to 2.5 g/10 min, determined according to ISO 1133, as described for the component CG of the inner layer G composition.

All embodiments described for the component CG are embodiments of the component CE. The component CE may be selected from anyone of these embodiments independently, and the selected embodiment may be the same or different for CE and CG.

Preferably, the component CE is present in an amount of 5 to 15 wt.%, more preferably 7 to 13 wt.%, in the outer layer E composition, based on the total weight of the outer layer E composition.

In one embodiment, the outer layer E composition comprises, or consists of, the components AE and BE and optionally CE in any of the above-described embodiments.

In one embodiment, the outer layer E composition comprises, or consist of, the same polymer components (e.g. AG, BG1 and optionally CG) as the inner layer G composition.

In a preferred embodiment, the outer layer E composition comprises, or consists of, the component AE in an amount of 50 to 75 wt.%, the component BE in an amount of 25 to 40 wt.% and optionally the component CE in an amount of 0 to 15 wt.%, based on the total weight of the outer layer E composition.

Properties

The print film is characterized by a high stiffness (e.g. tensile moduli of 500 to 1000 MPa) higher heat resistance (e.g. SIT of 110 to 120 °C) along with good optical properties (i.e. haze and gloss). These was particularly achieved by the use of the component AG in the print film. Also the components BG1 and/or BG2 contribute to the improved properties, in particular to higher stiffness and/or SIT without sacrificing optical properties of the print film (i.e. gloss and haze).

**Sealant Film**

Structure

The expression "sealant film" denotes a film that comprises a sealing layer, which is a layer that promotes bonding to another film, layer or article.

The sealant film according to the present invention comprises, or consists of, several layers, and at least an outer layer A, a core layer B and an inner layer C. The core layer B is located between the external layers, i.e. the outer layer A and the inner layer C. Preferably, the inner layer C is the sealing layer. When laminated to the print film, the inner layer C forms the inner surface of the laminate film.

In one embodiment, the sealant film consists of an outer layer A, a core layer B and an inner layer C. In another embodiment, the sealant film comprises one or more further intermediate (or sub-skin) layers X.

In a particular embodiment, the sealant film further comprises one or more intermediate layer(s) X between the core layer B and the inner layer C, and the core layer B and the outer layer A, for example in a five-layer film structure A/X1/B/X2/C or a seven-layer film structure A/X1/X1/B/X2/X2/C. Preferably, the sealant film comprises up to nine layers, more preferably up to seven layers.

If present, the intermediate layer(s) X preferably comprise(s), or consist(s) of, a composition similar to the composition of its neighboring layer, which may thus be a composition of the core layer B or either of a composition of the neighboring inner layer C or the neighboring outer layer A.

Preferably, the sealant film has a thickness of from 35 to 120 $\mu$m, more preferably from 40 to 110 $\mu$m and most preferably from 40 to 100 $\mu$m.

In the sealant film, the core layer B preferably has a thickness of 30 to 80 %, more preferably 35 to 75 % and most preferably 40 to 70 %, of the total sealant film thickness.

The outer layer A and/or the inner layer C preferably each has/have a thickness of 10 to 35 %, preferably 15 to 30%, such as 25 %, of the total sealant film thickness. In a five-layer film structure A/X1/B/X2/C, the inner layer C and/or the outer layer A preferably each has/have a thickness of 5 to 20 % of, more preferably of 7.5 to 15 %, of the total sealant film thickness.

Preferably, the sealant film is a "polyethylene film" as defined above for the print film.

The sealant film and its respective layer compositions for layer preparation may comprise additives of similar kind and amount as described for the print film.

Preferably, the sealant film is a non-oriented film, orientation being defined above with respect to the print film.

Composition

Each of the sealant film layers is made of a composition comprising at least one polymeric (e.g. polyethylene) component. If the composition comprises more than one polymeric component, it is a blend of these components. Additional compounds (such as additives like polymer processing aids, anti-block or slip agents) may be present in the composition.

### Inner Layer C

The inner layer C is made of an inner layer C composition comprising components, which particularly contribute to heat seal performance and optical properties of the film. The inner layer C composition comprises at least one ethylene polymer. When laminated to a print film, the inner layer C forms the inner surface of the laminate film. The inner layer C of the sealant film is preferably the sealing layer.

### Component AC

Preferably, the inner layer C of the sealant film is made of an inner layer C composition comprising a component AC, which is a linear low density ethylene polymer (LLDPE) having a density of 915 to 925 $kg/m^3$ and a melt flow rate ($MFR_2$) of 0.5 to 2.0 g/10 min, determined according to ISO 1133.

Density of the component AC is lower than the density of the component AG, preferably by at least 3 $kg/m^3$, more preferably by at least 5 $kg/m^3$.

LLDPEs are well known in the art and are produced in polymerization processes using a catalyst.

Preferably, the component AC is a multimodal ethylene copolymer, more preferably a bimodal ethylene copolymer, and even more preferably a copolymer of ethylene and at least two different C4 to C12 alpha-olefin monomers, i.e. a terpolymer.

Preferably, the ethylene copolymer has a ratio $MFR_{21}/MFR_2$ of from 13 to 30 and/or an MWD of 6 or less.

Preferably, the ethylene copolymer comprises, or consists of, a multimodal polymer of ethylene with one or more comonomers selected from alpha-olefins having from 4 to 10 carbon atoms, which has a ratio $MFR_{21}/MFR_2$ of from 13 to 30 and an MWD of 6 or less.

Such multimodal ethylene copolymers are disclosed, for example, in WO2016/083208.

The multimodal ethylene copolymer preferably has an $MFR_2$ of from 0.6 to 2.0 g/10 min, and particularly preferred from 1.2 to 1.8 g/10 min.

Preferably, the multimodal ethylene copolymer has a density of from 910 to 925 $kg/m^3$, more preferably of from 913 to 922 $kg/m^3$, and particularly preferred of from 915 to 920 $kg/m^3$.

The multimodal ethylene copolymer preferably has a ratio $MFR_{21}/MFR_2$ of from 13 to 30, more preferably from 15 to 25.

The multimodal ethylene copolymer preferably has an MWD of 6 or less and usually more than 1, more preferably of from 3 to 5.

The alpha-olefin comonomers having from 4 to 10 carbon atoms of the multimodal ethylene copolymer are preferably 1-butene and/or 1-hexene.

Preferably, the total amount of comonomers present in the multimodal ethylene copolymer is from 0.5 to 10 mol%, preferably from 1 to 8 mol%, more preferably from 1 to 5 mol%, still more preferably from 1.5 to 5 mol% and most preferably from 2.5 to 4 mol%.

In a preferred embodiment, the multimodal ethylene copolymer is a bimodal copolymer, i.e. it comprises a low molecular weight and a high molecular weight component, and has an $MFR_2$ of from 1.2 to 1.8 g/10 min, and/or an $MFR_5$ of from 3.0 to 5.0 g/10 min, and/or an $MFR_{21}$ of from 20 to 40 g/10 min, and/or a density of from 916 to 920 $kg/m^3$, and/or a molecular weight distribution (MWD) of from 3 to 5, and/or an $M_n$ of from 15 to 25 kg/mol, and/or an $M_w$ of from 80 to 115 kg/mol, and/or an $MFR_{21}/MFR_2$ ratio ($FRR_{21/2}$) of from 15 to 25, and/or an $MFR_{21}/MFR_5$ ratio ($FRR_{21/5}$) of from 6 to 9.

In a further preferred embodiment, the ethylene copolymer of component AC comprises, or consists of, an ethylene terpolymer, more preferably a multimodal ethylene terpolymer (II).

Preferably, the multimodal ethylene terpolymer (II) is an ethylene terpolymer having a density of from 910 $kg/m^3$ to 925 $kg/m^3$ and an $MFR_2$ of from 0.5 to 2.0 g/10 min.

The multimodal ethylene terpolymer (II) preferably comprises, or consists of, a multimodal polymer of ethylene with at least two different comonomers selected from alpha-olefins having from 4 to 10 carbon atoms, which has a ratio $MFR_{21}/MFR_2$ of from 13 to 30 and an MWD of 5 or less.

Such multimodal ethylene terpolymers are disclosed, for example, in WO2016/083208. As far as definitions (such as for the "modality" of a polymer) and production methods for these ethylene terpolymers are concerned, it is referred to WO2016/083208. Furthermore, all embodiments and preferred embodiments of such ethylene terpolymers as described in WO2016/083208, which have a density in the range of from 910 to 925 $kg/m^3$ are also preferred embodiments of the multimodal ethylene terpolymer (II) in the present disclosure, whether or not explicitly described herein.

The multimodal ethylene terpolymer (II) preferably has an $MFR_2$ of from 0.6 to 2.0 g/10 min, and particularly preferred from 1.2 to 1.8 g/10 min.

Preferably, the multimodal ethylene terpolymer (II) has a density of from 910 to 925 $kg/m^3$, more preferably from 913 to 922 $kg/m^3$, and particularly preferred from 915 to 920 $kg/m^3$.

The multimodal ethylene terpolymer (II) preferably has a ratio $MFR_{21}/MFR_2$ of from 13 to 30, more preferably from 15 to 25.

The at least two alpha-olefin comonomers having from 4 to 10 carbon atoms of the multimodal ethylene terpolymer (II) are preferably 1-butene and 1-hexene.

Preferably, the total amount of comonomers present in the multimodal ethylene terpolymer (II) is from 0.5 to 10 mol%, more preferably from 1 to 8 mol%, even more preferably from 1 to 5 mol%, still preferably from 1.5 to 5 mol% and most preferably from 2.5 to 4 mol%.

The multimodal ethylene terpolymer (II), which preferably is a bimodal terpolymer, preferably comprises, or consists of, an ethylene polymer component (A1) and an ethylene polymer component (B1), wherein the ethylene polymer component (A1) has higher $MFR_2$ than the ethylene polymer component (B1).

Preferably, the ethylene polymer component (A1) has an $MFR_2$ of from 1 to 50 g/10 min, more preferably from 1 to 40 g/10 min, even more preferably from 1 to 30 g/10 min, still more preferably from 2 to 20 g/10 min, still more preferably from 2 to 15 g/10 min and most preferably from 2 to 10 g/10 min.

The ratio of the $MFR_2$ of ethylene polymer component (A1) to the $MFR_2$ of the ethylene polymer component (B1) is from 2 to 50, preferably from 5 to 40, more preferably from 10 to 30, even more preferably from 10 to 25 and most preferably from 11 to 25.

Preferably, the ethylene polymer component (A1) comprises a different comonomer than the ethylene polymer component (B1).

Preferably, the ethylene polymer component (A1) has a lower amount (mol%) of comonomer than the ethylene polymer component (B1), more preferably, the ratio of [the amount (mol%) of the alpha-olefin comonomer having from 4 to 10 carbon atoms comonomer present in ethylene polymer component (A1)] to [the amount (mol%) of at least two alpha-olefin comonomers having from 4 to 10 carbon atoms of the final multimodal ethylene terpolymer] is of from 0.10 to 0.60, preferably from 0.15 to 0.50.

Preferably, the alpha-olefin comonomer having from 4 to 10 carbon atoms of the ethylene polymer component (A1) is 1-butene and the alpha-olefin comonomer having from 4 to 10 carbon atoms of the ethylene polymer component (B1) is 1-hexene.

Preferably, the ethylene polymer component (A1) has different, preferably higher, density than the density of the ethylene polymer component (B1).

The density of the ethylene polymer component (A1) is preferably from 925 to 950 $kg/m^3$, more preferably from 930 to 945 $kg/m^3$.

Preferably, the multimodal ethylene terpolymer (II) comprises the ethylene polymer component (A1) in an amount of from 30 to 70 wt.%, more preferably from 40 to 60 wt.%, even more preferably from 35 to 50 wt.%, still more preferably from 40 to 50 wt.%; and the ethylene polymer component (B) in an amount of from 70 to 30 wt.%, more preferably from 60 to 40 wt.%, even more preferably from 50 to 65 wt.%, still more preferably from 50 to 60 wt.%, based on the total amount (100 wt.%) of the multimodal ethylene terpolymer (II).

Most preferably, the multimodal ethylene terpolymer (II) consists of the ethylene polymer components (A1) and (B1) as the sole polymer components. Accordingly, the split between the ethylene polymer component (A1) to the ethylene polymer component (B1) is (30 to 70):(70 to 30) preferably (40 to 60):(60 to 40), more preferably (35 to 50):(65 to 50), still more preferably (40 to 50):(50 to 60).

In a particularly preferred embodiment, the multimodal ethylene terpolymer (II) is a bimodal terpolymer, i.e. comprises a low molecular weight and a high molecular weight component, and has an $MFR_2$ of from 1.2 to 1.8 g/10 min, and/or an $MFR_5$ of from 3.0 to 5.0 g/10 min, and/or an $MFR_{21}$ of from 20 to 40 g/10 min, and/or a density of from 915 to 920 $kg/m^3$, and/or a molecular weight distribution (MWD) of from 3.0 to 5.0, and/or an $M_n$ of from 15 to 25 kg/mol, and/or an $M_w$ of from 80 to 115 kg/mol, and/or an $MFR_{21}/MFR_2$ ratio ($FRR_{21/2}$) of from 15 to 25, and/or an $MFR_{21}/MFR_5$ ratio ($FRR_{21/5}$) of from 6 to 9.

Preferred as the multimodal ethylene terpolymers (II) are also commercially available products such as Anteo™ from Borealis or Borouge having the properties as required herein, especially Anteo™ FK1828 or Anteo™ FK1820.

Preferably, the component AC is present in an amount of 50 to 95 wt.%, more preferably 60 to 90 wt.% and most preferably 70 to 85 wt.%, in the inner layer C composition, based on the total weight of the inner layer C composition.

The component AC is particularly suitable to impart low seal initiation temperature to the sealant film, while maintaining good optical properties.

*Component BC*

The inner layer C composition may comprise a component BC. Preferably, the component BC is a low density ethylene polymer (LDPE), preferably having a density of 918 to 928 kg/m$^3$ and a melt flow rate (MFR$_2$) of 1.5 to 2.5 g/10 min, determined according to ISO 1133, as for the component CG of the inner layer G composition.

All embodiments described for the component CG are embodiments of the component BC. The component BC may be selected from anyone of these embodiments independently, and the selected embodiment may be the same or different for BC and CG.

Preferably, the component BC is present in an amount of 5 to 50 wt.%, more preferably 10 to 30 wt.%, in the inner layer C composition, based on the total weight of the inner layer C composition.

In one embodiment, the inner layer C composition comprises, or consists of, the components AC and BC in any of the above-described embodiments.

In a preferred embodiment, the inner layer C composition comprises, or consists of, the component AC in an amount of 50 to 95 wt.%, preferably 70 to 85 wt.%, and the component BC in an amount of 5 to 50 wt.%, preferably 15 to 30 wt.%, based on the total weight of the inner layer C composition.

## Core Layer B

The core layer B of the sealant film is made of a core layer B composition comprising components, which particularly contribute to stiffness and other mechanical properties like dart impact and tear resistance of the film.

*Component AB*

The core layer B composition may comprise a component AB. Preferably, the component AB is a medium density ethylene polymer (MDPE), preferably having a density of 925 to 945 kg/m$^3$ and a melt flow rate (MFR$_2$) of 0.05 to 0.50 g/10 min, determined according to ISO 1133.

Such MDPEs are also well known in the art and are usually produced in polymerization processes using a catalyst.

The MDPE of component AB preferably is a multimodal MDPE, more preferably bimodal MDPE. Such multimodal MDPEs and their production are, for example, described in WO 2017/021389 A1, p. 8 to 10, to which it is referred.

Preferably, the MDPE of component AB has a density of 930 to 940 kg/m$^3$, more preferably of 932 to 938 kg/m$^3$. Preferably, the density of the component AB is higher than that of component AC.

Preferably, the MDPE of component AB is an ethylene copolymer. The comonomer can be alpha-olefins having 4 to 12 carbon atoms, e.g. 1-butene, 4-methyl-1-pentene, 1-hexene, 1-octene, 1-decene. More preferably, the MDPE is a copolymer of ethylene and 1-butene or 1-hexene, most preferably a copolymer of ethylene and 1-butene.

Preferably, the total amount of comonomers present in the MDPE of component AB is of 1.0 to 4.0 mol%, more preferably of 1.5 to 3.5 mol%, and most preferably 2.0 to 3.2 mol%.

Preferably, the MDPE of component AB has an MFR$_2$ of 0.06 to 0.35 g/10 min, more preferably of 0.08 to 0.30 g/10 min, and most preferably 0.10 to 0.20 g/10 min.

Preferably, the MDPE of component AB has an MFR$_5$ of 0.35 to 1.20 g/10 min, more preferably of 0.37 to 1.00 g/10 min, and most preferably 0.40 to 0.80 g/10 min.

In a particularly preferred embodiment, the MDPE of component AB has an MFR$_2$ of 0.10 to 0.20 g/10 min, and/or an MFR$_5$ of 0.40 to 0.80 g/10 min and/or an MFR$_{21}$ of 10 to 20 g/10 min, and/or a density of 932 to 938 kg/m$^3$, and/or a molecular weight distribution (MWD) of 15 to 35, and/or an M$_n$ of 8 to 12 kg/mol, and/or an M$_w$ of 150 to 280 kg/mol, and/or an MFR$_{21}$/MFR$_2$ ratio (FRR$_{21/2}$) of 80 to 150, and/or an MFR$_{21}$/MFR$_5$ ratio (FRR$_{21/5}$) of 20 to 30. All molecular weight parameters are determined by the GPC conventional method in standard calibration as further described in detail below.

As the MDPE of component AB, resin Borstar FB1350 as produced by Borealis or Borouge may be used.

Preferably, the component AB is present in an amount of 35 to 80 wt.%, more preferably 40 to 75 wt.% and most preferably 50 to 70 wt.%, in the core layer B composition, based on the total weight of the core layer B composition.

The component AB particularly confers high stiffness to the core layer B.

*Component BB*

The core layer B composition may comprise a component BB. Preferably, the component BB is a linear low density ethylene polymer (LLDPE), preferably having a density of 915 to 925 kg/m$^3$ and a melt flow rate (MFR$_2$) of 0.5 to 2.0 g/10 min, determined according to ISO 1133, as for the component AC of the inner layer C composition.

All embodiments described for the component AC are embodiments of the component BB. The component BB may be selected from anyone of these embodiments independently, and the selected embodiment may be the same or different for BB and AC.

Preferably, the component BB is present in an amount of 15 to 45 wt.%, more preferably 20 to 40 wt.%, in the core layer B composition, based on the total weight of the core layer B composition.

In particular in combination with the component AB, the component BB contributes to high dart impact of the sealant film along with good stiffness.

*Component CB*

The core layer composition may comprise a component CB. Preferably, the component CB is a low density ethylene polymer (LDPE), preferably having a density of 918 to 928 kg/m$^3$ and a melt flow rate (MFR$_2$) of 1.5 to 2.5 g/10 min, determined according to ISO 1133, as described for the component CG of the inner layer G composition.

All embodiments described for the component CG are embodiments of the component CB. The component CB may be selected from anyone of these embodiments independently, and the selected embodiment may be the same or different for CB and CG.

Preferably, the component CB is present in an amount of 5 to 15 wt.%, more preferably 7 to 13 wt.%, in the core layer B composition, based on the total weight of the inner layer B composition.

In one embodiment, the core layer B composition comprises, or consists of, the components AB and BB and optionally CB in any of the above-described embodiments.

In a preferred embodiment, the core layer B composition comprises, or consists of, the component AB in an amount of 50 to 75 wt.%, the component BB in an amount of 25 to 40 wt.% and optionally the component CE in an amount of 0 to 15 wt.%, based on the total weight of the core layer B composition.

**Outer Layer A**

The outer layer A of the sealant film is made of an outer layer A composition comprising one or more components. In the laminate film, the outer layer A may be disposed between the core layer B and the outer layer E of the print film, and it contributes to the mechanical and optical properties of the film.

*Component AA*

The outer layer composition may comprise a component AA. Preferably, the component AA is a linear low density ethylene polymer (LLDPE), preferably having a density of 915 to 930 kg/m$^3$ and a melt flow rate (MFR$_2$) of 0.05 to 1.0 g/10 min, determined according to ISO 1133, as described for the component BG1 of the inner layer G composition.

All embodiments described for the component BG1 are embodiments of the component AA. The component AA may be selected from anyone of these embodiments independently, and the selected embodiment may be the same or different for AA and BG1.

Preferably, the component AA is present in an amount of 25 to 55 wt.%, more preferably 30 to 50 wt.%, in the outer layer A composition, based on the total weight of the outer layer A composition.

*Component BA*

The outer layer composition may comprise a component BA. Preferably, the component BA is a linear low density ethylene polymer (LLDPE), preferably having a density of 915 to 925 kg/m$^3$ and a melt flow rate (MFR$_2$) of 0.5 to 2.0 g/10 min, determined according to ISO 1133, as for the component AC of the inner layer C composition.

All embodiments described for the component AC are embodiments of the component BA. The component BA may be selected from anyone of these embodiments independently, and the selected embodiment may be the same or different for BA and AC.

Preferably, the component BA is present in an amount of 25 to 55 wt.%, more preferably 30 to 50 wt.%, in the outer layer A composition, based on the total weight of the outer layer A composition.

*Component CA*

The outer layer A composition may comprise a component CA. Preferably, the component CA is a low density ethylene polymer (LDPE), preferably having a density in the range of 918 kg/m$^3$ to 928 kg/m$^3$ and a melt flow rate (MFR$_2$) in the range of 1.5 to 2.5 g/10 min, determined according to ISO 1133, as described for the component CG of the inner layer G composition.

All embodiments described for the component CG are embodiments of the component CA. The component CA may be selected from anyone of these embodiments independently, and the selected embodiment may be the same or different for CA and CG.

Preferably, the component CA is present in an amount of 5 to 35 wt.%, more preferably 10 to 30 wt.%, in the outer layer A composition, based on the total weight of the outer layer A composition.

In one embodiment, the outer layer A composition comprises, or consists of, the components AA and BA and optionally CA in any of the above-described embodiments.

In a preferred embodiment, the outer layer A composition comprises, or consists of, the component AA in an amount of 30 to 50 wt.%, the component BA in an amount of 30 to 50 wt.% and optionally the component CA in an amount of 0 to 30 wt.%, based on the total weight of the outer layer A composition.

*Particular Embodiments of the Sealant Film*

The present invention also relates to a sealant film. In a particular embodiment, the present invention relates to a sealant film comprising an outer layer A, a core layer B and an inner layer C, wherein the inner layer C is made of an inner layer C composition comprising:

a) a component AC, which is a linear low density ethylene polymer having a density of 915 to 925 $kg/m^3$ and a melt flow rate ($MFR_2$) of 0.5 to 2.0 g/10 min, determined according to ISO 1133; and

b) a component BC, which is a low density polyethylene having a density of 918 to 928 $kg/m^3$ and a melt flow rate ($MFR_2$) of 1.5 to 2.5 g/10 min, determined according to ISO 1133, preferably in an amount of 10 to 30 wt.%, based on the total weight of the inner layer C composition; and

wherein at least one of the following criteria is met:

c) the core layer B is made of a core layer B composition comprising a component AB, which is a medium density polyethylene having a density of 925 to 945 $kg/m^3$ and a melt flow rate ($MFR_2$) of 0.05 to 0.50 g/10 min, determined according to ISO 1133, preferably in an amount of 40 to 75 wt.%, based on the total weight of the core layer B composition; and

d) the outer layer A is made of an outer layer A composition comprising a component AA, which is a linear low density ethylene polymer having a density of 915 to 930 $kg/m^3$ and a melt flow rate ($MFR_2$) of 0.05 to 1.0 g/10 min, determined according to ISO 1133, preferably in an amount of 30 to 50 wt.%, based on the total weight of the outer layer A composition.

In one embodiment, the criterion c) is met. In another embodiment, the criterion d) is met. In a still further embodiment, both criteria c) and d) are met.

Preferably, the component AC is present in an amount of 50 to 95 wt.%, more preferably 60 to 90 wt.% and most preferably 70 to 85 wt.%, in the inner layer C composition, based on the total weight of the inner layer C composition.

The components AC, BC, AB and AA may be selected from any one of the embodiments described above.

The inner layer C composition may further comprise a component CC, in any of the embodiments described above.

The core layer B composition and the outer layer A composition may comprise further components as described above with respect to the particular layers of the sealant film.

Properties

The sealant film is characterized by a relatively high stiffness for a sealant film (i.e. tensile moduli of 300 to 500 MPa) and also a high drop impact (i.e. high DDI) and other tensile properties. The sealant film shows excellent sealing behavior through lower seal initiation and hot tack temperatures (e.g. SIT below 95 °C). These properties may be achieved by the use of the component AC in the sealant film, and may be additionally improved by the presence of the component BC in the inner layer C. Also the presence of the components AA and AB in the respective other layers A and B of the sealant film (even more along with components BA and BB) further contributed to the excellent properties of the sealant film.

Preferably, the sealant film has a seal initiation temperature at 5 N (SIT) of less than 100 °C, preferably less than 95 °C, when measured at the inner layer C of the sealant film. Preferably, the film has a seal initiation temperature at 5 N (SIT) of from 80 to 100 °C, preferably from 85 to 95 °C, when measured at the inner layer C of the sealant film. The seal initiation temperature at 5 N (SIT) is determined according to ASTM F 2029 and ASTM F 88.

Preferably, the sealant film has a tensile modulus (1% secant modulus) in machine direction (MD) of from 280 MPa to 600 MPa, preferably 300 MPa to 500 MPa. The tensile modulus (1% secant modulus) in machine direction (MD) is determined according to ASTM D882.

Preferably, the sealant film has a haze value of less than 12 %, more preferably of less than 10 %. Preferably, the sealant film has a haze value of from 3 to 12 %, most preferably of from 5 to 10 %. The haze value is determined according to ASTM D1003 as a measure for the transparency of the film and the value indicates good transparency.

Preferably, the sealant film has a gloss value of at least 80, more preferably at least 90. Preferably, the sealant film has a gloss value of from 80 to 140, more preferably of from 90 to 130. The gloss value (GU) is determined at 60 ° according to ISO 2813 at the inner layer C or outer layer A, preferably at the inner layer C.

Preferably, the sealant film has a dart drop impact (DDI) of at least 200 g, more preferably at least 210 g. Preferably, the sealant film has a dart drop impact (DDI) of from 200 to 600 g, more preferably of from 210 to 550 g. The dart drop impact (DDI) is determined according to ASTM D1709 "method A", preferably on sealant films of a thickness of from 35 to 120 $\mu$m, more preferably from 40 to 110 $\mu$m and most preferably from 40 to 100 $\mu$m.

**Polyethylene Laminate Film**

Structure

In the present invention the polyethylene laminate film comprises, or consists of, a sealant film and a print film of any of the above-described embodiments, laminated to each other.

The laminate film comprises an inner surface and an outer surface, wherein the inner layer G of the print film forms the outer surface of the laminate film and the inner layer C of the sealant film forms the inner surface of the laminate film.

In the laminate film, the print and the sealant film are connected to each via their outer layers E and A, and these layers form the middle layers of the laminate film. In other words, the outer layer A of the sealant film is laminated to the outer layer E of the print film.

Connection, i.e. lamination of the print and the sealant film to each other may be affected by any conventional lamination device using any conventional lamination method, such as adhesive lamination, including both solvent-based and solvent-less adhesive lamination using any conventional, commercially available adhesive. The adhesive may be applied to the sealant and/or the print film in any suitable manner. For example, the methods may include, the use of a laminating machine, gravure coating, roll coating, wire rod coating, spray coating etc. The film surface(s) for application of the adhesive may be corona treated to increase surface energy and to provide enough wettability for the adhesive components.

Lamination may alternatively be carried out without any adhesive, as sandwich lamination with or without a melt web, which may be pressed between the films. Such melt web may be any conventional melt web material based on polyethylene, such as LDPE. Lamination may further be performed via extrusion coating technique. All these lamination methods are well known in the art and described in literature.

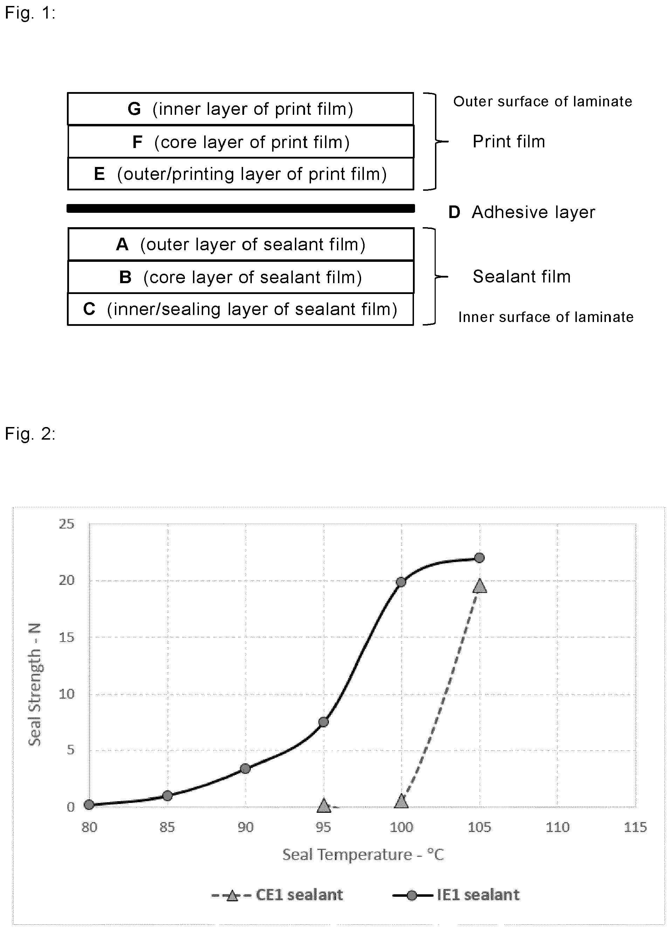

Preferably, lamination is performed by use of an adhesive (such as a solventfree adhesive). The adhesive may form a layer between the layers E and A (e.g. adhesive layer D in Figure 1).

Preferably, the adhesive has a weight per square meter of 1.0 g/m$^2$ to 3.5 g/m$^2$, more preferably from 1.2 g/m$^2$ to 2.5 g/m$^2$.

Preferably, the adhesive (or the adhesive layer) makes up to less than 5 wt.% of the total weight of the laminate film. The percentage of adhesive is usually dependent on the total weight of the laminate film, which correlates with the thickness of the laminate film. For example, laminate films of about 75 $\mu$m preferably comprise up to 4 wt.% of adhesive, based on the total weight of the laminate film, while laminate films of about 130 $\mu$m preferably comprise up to 3 wt.% of adhesive, based on the total weight of the laminate film.

Preferably, the laminate film has a thickness of 50 to 160 $\mu$m, more preferably 55 to 145 $\mu$m and most preferably 60 to 130 $\mu$m.

The laminate film is a "polyethylene film" as defined above for the print film. Use of polyethylene films enables the provision of fully recyclable and sustainable packaging structures. Accordingly, it is particularly preferred that both, the print and the sealant film are polyethylene films, which comprise at least 90 wt.%, more preferably at least 95 wt.% and most preferably at least 98 wt.% of ethylene polymer (comprising ethylene homopolymers and copolymers of ethylene and one or more C3 to C12 alpha-olefins), based on the total weight of the respective film. Preferably, none of the print or sealant film comprises non-polyolefin polymers such as e.g. polyesters or polyamides. Although, the laminate film may comprise non-polyolefin polymers in the adhesive layer (e.g. a polyurethane adhesive), which preferably makes less than 5 wt.% of the total weight of the laminate film.

The substrate film is generally reverse printed, i.e. printing is performed on the outer layer E of the substrate film, which is laminated with the outer layer A of the sealant film as depicted in Figure 1, and wherein the outer layers E and A form the core/middle layers of the laminate film.

Properties

The laminate film according to the present invention has improved mechanical properties, along with good optical and excellent barrier properties. With the improved heat resistance, the laminate film may run smoothly on high speed VFFS machines. In general, higher SIT in the print film over the sealant film is desired for the subsequent use in the VFFS line to avoid sealing jaw sticking issue, which is very much correlated with a delta SIT (also referred to as SIT gap between the inner laminate surface and the outer surface of laminates).

The composition of the inner layers G and C of the print and sealant film is chosen in such a way that the seal initiation temperature (SIT) at 5 N of the outer surface of the laminate film is at least 10 °C, preferably at least 11 °C, more preferably at least 12 °C, higher than the seal initiation temperature at 5 N of the inner surface of the laminate film, the seal initiation temperature being determined according to ASTM F2029 and ASTM F88.

Preferably, the seal initiation temperature (SIT) at 5 N of the outer surface of the laminate film is between 10 and 30 °C, more preferably between 12 and 25 °C, higher than the seal initiation temperature at 5 N of the inner surface of the laminate film.

This temperature difference between the two external layers of the laminate film achieves that the laminate films may be run at a packaging speed of 50 to 80 pouches/min without any jaw-sticking issue at sealing bars in the VFFS line.

Preferably, the outer surface of the laminate film has a seal initiation temperature at 5 N (SIT) of at least 105 °C, preferably at least 110 °C, when measured at the outer surface (i.e. inner layer G) of the laminate film. Preferably, the film has a seal initiation temperature at 5 N (SIT) of from 105 to 125 °C, preferably from 110 to 125 °C, when measured at the outer surface (i.e. inner layer G) of the laminate film. The seal initiation temperature at 5 N (SIT) is determined according to ASTM F 2029 and ASTM F 88.

Preferably, the inner surface of the laminate film has a seal initiation temperature at 5 N (SIT) of less than 110 °C, preferably less than 105 °C, when measured at the inner surface (i.e. inner layer C) of the laminate film. Preferably, the film has a seal initiation temperature at 5 N (SIT) of from 80 to 110 °C, preferably from 85 to 105 °C, when measured at the inner surface (i.e. inner layer C) of the laminate film. The seal initiation temperature at 5 N (SIT) is determined according to ASTM F 2029 and ASTM F 88. A further important parameter used in determining film stiffness is tensile strength / 1% secant modulus. Secant modulus is a measure of the strength characteristics in the film's elastic region and represents the actual deformation at a selected point on the stress-strain curve. As a result, secant modulus provides valuable insight into stiffness and resistance to elongation in use, or, how extensible the film is during the subsequent printing and packaging operation like Form, Fill & Seal (FFS) machine and/or under normal use tensions of packaging. Hence, stiffness is critical to any polyethylene film.

Preferably, the laminate film has a tensile modulus (1% secant modulus) in machine direction (MD) of from 400 MPa to 800 MPa, preferably 400 MPa to 600 MPa. The tensile modulus (1% secant modulus) in machine direction (MD) is determined according to ASTM D882.

Preferably, the sealant film has a tensile modulus (1% secant modulus) in machine direction (MD) of from 280 MPa to 600 MPa, preferably 300 MPa to 500 MPa. The tensile modulus (1% secant modulus) in machine direction (MD) is determined according to ASTM D882.

Preferably, the print film has a tensile modulus (1% secant modulus) in machine direction (MD) of from 500 MPa to 1000 MPa, preferably 600 MPa to 800 MPa. The tensile modulus (1% secant modulus) in machine direction (MD) is determined according to ASTM D882.

It has been has found that improved laminate film performance for the high speed FFS packaging can be achieved by using high stiffness (e.g. of 400 to 600 MPa) polyethylene laminate films, produced with a sealant film that has been developed with superior stiffness (e.g. 300 to 500 MPa) and low SIT (e.g. below 95 °C) in the sealing layer and when laminated with a print film having an excellent heat resistance (high SIT) and high stiffness (e.g. 500 to 1000 MPa) with good optical properties (i.e. haze and gloss).

Preferably, the laminate film has a haze value of less than 12 %, more preferably of less than 10 %. Preferably, the laminate film has a haze value from 3 to 12 %, more preferably of from 5 to 10 %. The haze value is determined according to ASTM D1003 as a measure for the transparency of the film and the value indicates good transparency.

Preferably, any or both of the print and sealant film has/have a haze value of less than 12 %, more preferably of less than 10 %. Preferably, any or both of the print and sealant film has/have a haze value of from 3 to 12 %, more preferably of from 5 to 10 %. The haze value is determined according to ASTM D1003 as a measure for the transparency of the film and the value indicates good transparency.

Preferably, the laminate film has a gloss value of at least 80, more preferably at least 90. Preferably, the film has a gloss value of from 80 to 140, more preferably of from 90 to 130. The gloss value (GU) is determined at 60 ° according to ISO 2813 at the inner layer C or G, preferably at the inner layer G, which is the outer surface of laminate film.

Preferably, any or both of the print and sealant film has/have a gloss value of at least 80, more preferably at least 90. Preferably, any or both of the print and sealant film has/have a gloss value of from 80 to 140, more preferably of from 90 to 130. The gloss value (GU) is determined at 60 ° according to ISO 2813 at the respective inner layer C/G or outer layer A/E, preferably at the inner layer G and/or C.

Excellent barrier (e.g. water vapour resistance of less than 4.0 $g/m^2$/day) was achieved in the laminate films without using a barrier coating or metallization. Thus, the laminate film according to the invention has good barrier properties, where mainly moisture barrier is most important.

Preferably, the laminate film has a water vapor transmission rate (WVTR) of not greater than 5 $g/m^2$/d, more preferably not greater than 4.5 $g/m^2$/d. Preferably, the laminate film has a water vapor transmission rate (WVTR) of from 1 to 4 $g/m^2$/d, more preferably from 1.5 to 4.5 $g/m^2$/d. The water vapor transmission rate (WVTR) is determined according to ASTM F-1249, 37.8 °C, 90 % RH.

Preferably, the laminate film has an oxygen transmission rate (OTR) of not greater than 2000 $cm^3/m^2$/d, more preferably not greater than 1800 $cm^3/m^2$/d. Preferably, the laminate film has an oxygen transmission rate (OTR) of from 600 to 2000 $cm^3/m^2$/d, more preferably from 800 to 1800 $cm^3/m^2$/d. The oxygen transmission rate (OTR) is determined according to ISO 15105-2, 23 °C, 0 % RH.

Further properties of the laminate films are:

Preferably, the laminate film has a tensile modulus (1% secant modulus) in transverse direction (TD) of from 500 MPa to 1200 MPa, more preferably from 550 MPa to 1000 MPa. The tensile modulus (1% secant modulus) in transverse direction (TD) is determined according to ASTM D882.

Preferably, the laminate film has a tensile stress at break in machine direction (MD) of from 40 to 80 MPa, more preferably from 45 to 70 MPa. Preferably, the laminate film has a tensile stress at break in transverse direction (TD) of from 25 to 60 MPa, more preferably from 27 to 50 MPa.

Preferably, the laminate film has an elongation at break in machine direction (MD) of from 350 to 700 %, more preferably from 400 to 650 %. Preferably, the laminate film has an elongation at break in transverse direction (TD) of from 450 to 900 %, more preferably from 500 to 800 %.

The parameters tensile stress at break and elongation at break are determined according to ISO 527-3.

Preferably, the laminate film has a tear strength (Elmendorf) in machine direction (MD) of from 2.0 to 15.0 N, more preferably from 2.2 to 10.0 N. Preferably, the laminate film has a tear strength (Elmendorf) in transverse direction (TD) of from 20.0 to 50.0 N, more preferably from 23.0 to 45.0 N. The tear strength (Elmendorf) is determined according to ASTM D 1922.

Preferably, the laminate film has a dart drop impact (DDI) of at least 200 g, more preferably at least 210 g. Preferably, the laminate film has a dart drop impact (DDI) of from 200 to 600 g, more preferably of from 210 to 550 g. The dart drop impact (DDI) is determined according to ASTM D1709 "method A", preferably on laminate films of a thickness of from 50 to 160 $\mu$m, more preferably 55 to 145 $\mu$m and most preferably 60 to 130 $\mu$m.

Preferably, the laminate film has a coefficient of friction of less than 0.60, more preferably of less than 0.50. Preferably, the laminate film has a coefficient of friction of from 0.10 to 0.50, more preferably from 0.15 to 0.48. The coefficient of friction is determined according to ISO 8295 at dynamic condition (in/in or out/out).

In one embodiment, the film the seal initiation temperature (SIT) at 5 N of the outer surface of the laminate film is between 10 and 30 °C higher than the seal initiation temperature at 5 N of the inner surface of the laminate film, determined according to ASTM F 2029 and ASTM F 88, the gloss value is of at least 80, determined at 60 ° according to ISO 2813 at the inner layer G, and optionally the tensile modulus (1% secant modulus) in machine direction (MD) is from 400 MPa to 800 MPa, determined according to ASTM D882.

Preparation

Any of the sealant and print films of the laminate film are generally prepared by a conventional process for the preparation of multilayered films, wherein the layers of the films are co-extruded.

The different polymer components in any of the layers of the film are typically intimately mixed prior to layer formation, for example using a twin screw extruder, preferably a counter-rotating extruder or a co-rotating extruder. Then, the blends are converted into a coextruded film.

The films can be produced by blown film or cast film process. In order to manufacture such multilayered films, for example generally at least two polymer melt streams are simultaneously extruded (i.e. coextruded) through a multichannel tubular, annular or circular die to form a tube which is blown-up, inflated and/or cooled with air (or a combination of gases) to form a film. The manufacture of blown film is a well-known process.

The blown (co-)extrusion can be effected at a temperature in the range 150°C to 230°C, more preferably 160 °C to 225°C and cooled by blowing gas (generally air) at a temperature of 10 to 40°C, more preferably 12 to 16 °C to provide a frost line height of 0.5 to 4 times, more preferably 1 to 2 times the diameter of the die.

The blow up ratio (BUR) should generally be in the range of 1.5 to 3.5, preferably 2.0 to 3.0, more preferably 2.1 to 2.8.

As the sealant and print films are preferably non-oriented films, they are preferably not subjected to a stretching step for a possible orientation.

A laminate film is prepared from the sealant and print film by a lamination process as described above.

## Article & Use

The invention also relates to an article comprising the polyethylene laminate film according to the present invention. Preferred articles are packaging articles such as pouches, like stand up pouches, sacks, bag, sachets, lamitubes etc.

The invention further relates to the use of the polyethylene laminate film according to the present invention for packaging of an article. Particularly, they may be used in (Vertical) Form, Fill and Seal packaging technology or in the formation of pouches, such as stand up pouches, sacks, bags, sachets or lamitubes.

Specific articles and uses are heavy duty shipping sacks, detergent pouches, and articles/uses to pack different food items like rice, wheat, cereals, flours, food grains, pet-foods, and non-food items like detergent/washing powders, construction materials, chemicals and other materials.

Any one of the embodiments of the invention described herein can be combined with one or more of these embodiments. Particularly, any embodiment described for the polyethylene laminate film of the invention is applicable to the use of the polyethylene laminate film or the article.

Moreover, the invention relates to an article comprising the sealant film and to the use of a sealant film for packaging of an article, as described above for the laminate film.

In the following, the invention will further be illustrated by way of examples which refer to the figures showing:

Figure 1: Structure of one embodiment of the laminate film according to the invention.

Figure 2: Seal initiation temperature of the sealant film.

Figure 3: Seal initiation temperature of the print film.

## Measurement and Determination Methods

The following definitions of terms and determination methods apply for the above general description of the invention as well as to the below examples unless otherwise defined.

a) Measurement of melt flow rate MFR

The melt flow rate (MFR) was determined according to ISO 1133 and is indicated in g/10 min. The higher the melt flow rate, the lower the viscosity of the polymer. The MFR is determined at 190 °C for polyethylene and at a loading of 2.16 kg ($MFR_2$), 5.00 kg ($MFR_5$) or 21.6 kg ($MFR_{21}$).

The quantity FRR (flow rate ratio) is an indication of molecular weight distribution and denotes the ratio of flow rates at different loadings. Thus, $FRR_{21/5}$ denotes the value of $MFR_{21}/MFR_5$.

b) Density

Density of the polymer was determined according to ISO 1183-1:2004 (method A) on compression molded specimen prepared according to ISO 17855-2 and is given in $kg/m^3$.

c) GPC

*1) GPC conventional method*

Molecular weight averages ($M_z$, $M_w$ and $M_n$), molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N}(A_i \, x \, M_i)}{\sum_{i=1}^{N} A_i} \quad (2)$$

$$M_z = \frac{\sum_{i=1}^{N}(A_i \, x \, M_i^2)}{\sum_{i=1}^{N}(A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As mobile phase 1,2,4-trichlorobenzene (TCB) stabilized with 250 mg/L 2,6-Di tert butyl-4-methylphenol) was used. The chromatographic system was operated at column temperature of 160 °C and detector at 160 °C and at a constant flow rate of 1 mL/min. 200 $\mu$L of sample solution was injected per analysis. Data collection was performed using either Agilent Cirrus software version 3.3 or PolymerChar GPC-IR control software.

The column set was calibrated using 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3} \text{ mL/g}, \quad \alpha_{PS} = 0.655$$

$$K_{PE} = 39 \times 10^{-3} \text{ mL/g}, \quad \alpha_{PE} = 0.725$$

A third order polynomial fit was used to fit the calibration data.

All samples were prepared in the concentration range of around 1 mg/ml and dissolved at 160 °C for 3 (three) hours for PE in fresh distilled TCB stabilized with 250 ppm Irgafos168 under continuous gentle shaking

*2) GPC viscosity method*

Molecular weight averages ($M_z$, $M_w$ and $M_n$), Molecular weight distribution (MWD) of LDPE was determined by GPC-viscosity method using universal calibration. Molecular weight averages ($M_w$, $M_n$), Molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-4 2019. A PL 220 (Polymer Laboratories) GPC equipped with an IR4 infrared detector, an online four capillary bridge viscometer (PL-BV 400-HT) was used. 3x Olexis and 1x Olexis Guard columns from Polymer Laboratories as stationary phase and 1,2,4-trichlorobenzene (TCB, stabilized with 250 mg/L 2,6-Di tert butyl-4-methyl-phenol) as mobile phase at 160 °C and at a constant flow rate of 1 mL/min was applied. 200 $\mu$L of sample solution were injected per analysis. The corresponding detector constant of the viscometer as well as the inter-detector delay volumes were determined with a narrow PS standard (MWD = 1.01) with a molar mass of 132900 g/mol and an intrinsic viscosity of 0.4789 dl/g. The detector constant of the IR4 detector was determined using NIST1475a with dn/dc of 0.094 cm³/g.

The column set was calibrated using universal calibration (according to ISO 16014-2:2019) with at least 15 narrow MWD polystyrene (PS) standards in the range of 0.5 kg/mol to 11 600 kg/mol. The corresponded intrinsic viscosities of the PS standards were calculated from their corresponding concentration (IR4), online viscometer signals, and determined detector constants for polystyrene. For low molecular weight PS with a molar mass below 3000 g/mol the initial weight out concentration is used, due to end group effects in the IR detector.

The molecular weight of the sample ($M_2$) at each chromatographic slice using the universal calibration approach can be calculated by following correlation:

$$\log M_1[\eta_1] = V_R = \log M_2[\eta_2]$$

with: $M_1$ Molar mass of PS

$\eta_1$ intrinsic viscosity of the PS
$M_2$ Molar mass of sample
$\eta_2$ intrinsic viscosity of sample
$V_R$ Retention volume

All data processing and calculation was performed using the Cirrus Multi-Offline SEC-Software Version 3.2 (Polymer Laboratories a Varian inc. Company).

All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking.

**d)** Comonomer content

The comonomer content was determined as described in WO2019081611, pages 31 to 34.

**e)** Mechanical Properties

Tensile Modulus and Tensile Stress at break

Film tensile properties were determined at 23°C according to ISO 527-3 with a specimen Type 2 using blown film as indicated below. Tensile modulus in machine direction (MD) and tensile modulus in transverse direction (TD) were determined as 1% secant modulus with 5mm/min test speed and 50 mm gauge length according to ASTM D882.

Tensile stress at break were determined according to ISO 527-3 specimen Type 2 with 50 mm gauge length and 500 mm/min test speed. The film samples were produced as described below under "Examples".

Elongation at Break

Elongation at break in machine (MD) and transverse direction (TD) was determined according to ISO 527-3 on films with a thickness as indicated and produced as described below under "Examples".

Dart Drop Impact

Dart drop impact (DDI) was determined according to ASTM D1709 "method "A" on films with a thickness as indicated and produced as described below under "Examples".

**f)** Optical Properties

Gloss, clarity and haze as measures for the optical appearance of the films were determined according to ISO 2813 (gloss) and ASTM D1003 (haze and clarity) on films with thickness as indicated and produced as described below under "Examples".

Gloss of the outer and inner layers was determined according to ISO 2813 at an angle of 60°. As per ISO 2813, three measurement angles (20°, 60°, and 85°) can be done by BYK-Gardner Micro-TRI-Gloss Meter and gloss values of 60° is recorded and reported as gloss units (GU). Accordingly, gloss is determined on both surfaces of the film and determined separately.

**g)** Coefficient of friction

Coefficient of friction, both in/in and out/out, at dynamic conditions, was determined according to ISO 8295.

**h)** Seal initiation temperature (SIT)

In principle, heat seal is formed by bonding two films (polymeric) in the way that surfaces are pressed together into a close contact while being at least in partially molten. This test method also covers the evaluation part after the heat seal process is performed. The force required to separate a test strip of material containing the seal is measured using UTM (also to identify the mode of specimen failure). Following the ASTM F 2029; ASTM F 88 standard, a tested specimen with a film produced as described below under "Examples" where the sealed surfaces were selected. For testing, a minimum of five specimens shall be used for each seal temperature. The term "seal initiation temperature" (SIT) is specified as the "seal initiation temperature at 5 N" and refers to the temperature at which a seal is formed that will have a strength of 5 N after cooling. The temperature at which a heat seal forms immediately after the sealing operation (sealing time 1.0 seconds, sealing pressure 3 bar for less than 65 micron film and sealing time 1.5 seconds for 65 micron and above thickness), the strength of the heat seal being measured at a specified time interval (at least 24 hrs after completion of the sealing cycle and after the seal has cooled to ambient temperature and reached maximum strength).

**i)** Hot Tack temperature

This test method is a procedure to determine the temperature needed to reach a defined seal strength for a film sample under defined seal time and pressure following the ASTM F 1921 standard. Thus, a hot tack test measures the strength of heat seals in films immediately after a seal is made before cooling to room temperature conditions. For testing, film specimens of width 25mm and length >250mm was required for each seal temperature. Hot tack temperature at 1 N force (°C) was measured as per ASTM F 1921 in the following conditions: sealing pressure 3 bars, dwell/sealing time 1 second, cooling/delay time 100 mili second (release), test/peel speed 200 mm/s for less than 65 micron film. For 65 micron and above thickness, dwell/sealing time of 1.5 second is used with similar test conditions.

**j)** Water vapor transmission rate (WVTR)

Moisture vapor transmission rate of the films produced as described below under "Examples" was determined according to ASTM F-1249 standard. The water vapor transmission rate (WVTR) test is performed as per ASTM F1249:2006 and/or ISO15106-2:2003, at 37.8 °C at 90% relative humidity (RH).

**k)** Oxygen Transmission Rate (OTR)

Oxygen barrier property, i.e. oxygen transmission rate, was determined on blown films produced as described below. The specimen is mounted as a sealed semibarrier between two chambers at ambient atmospheric pressure. One chamber is slowly purged by a stream of nitrogen at a given temperature and relative humidity and the other chamber is purged by a stream of oxygen at the same temperature and relative humidity as the $N_2$ stream. As oxygen gas permeates through the film into the nitrogen carrier gas, it is transported to the coulometric detector where it produces an electrical current, the magnitude of which is proportional to the amount of oxygen flowing into the detector per unit time. The oxygen transmission rate (OTR) test is performed as per ISO 15105-2, at 23 °C and 0% relative humidity, with using 10 sccm of $N_2$ and $O_2$ (99.5%) gases and a film surface area of 50 $cm^2$.

**l)** Thickness

Thickness of the films was determined according to ISO 4593.

## Examples

3-layered sealant and print films, each consisting of a core layer, an inner layer and an outer layer, have been produced. Example IE1 represents a sealant film of the inventive laminate, while example CE1 is a comparative sealant film. Examples IE2 and IE3 represent print films of the inventive laminate and CE2 is a comparative print film. Each of the sealant films has a thickness of 45 $\mu$m and each of the print films of 27 $\mu$m. Thickness of the core layers of each of the films is 50% of the total thickness of the respective film and the thickness of each of the external layers (i.e. inner layer and outer layer) is 25% of the total thickness of the respective film.

All inventive examples and comparative examples are non-oriented film (as per definition). The details of inventive examples and comparative examples are summarized below:
Laminate films have been produced using these sealant and print films:

    Inventive Laminate 1 (IE4) comprises IE1 sealant film and IE2 print film;
    Inventive Laminate 2 (IE5) comprises IE1 sealant film and IE3 print film; and
    Comparative Laminate (CE3) comprises CE1 sealant film and CE2 print film.

Further details of the films are specified in Table 1.

Table 1: Structures and compositions of the films.

| Samples | Comp. Laminate (CE3) | Inventive Laminate (IE4) | Inventive Laminate (IE5) |
|---|---|---|---|
| Laminate structure | CE1 sealant film<br>CE2 print film | IE1 sealant film<br>IE2 print film | IE1 sealant film<br>IE3 print film |
| **Structure of the Sealant Film** | | | |
| | CE1 | IE1 | IE1 |
| Ratio layer thickness | 1:2:1 (25%/50%/25%) | 1:2:1 (25%/50%/25%) | 1:2:1 (25%/50%/25%) |
| Outer Layer (**A**) | 60% Sabic 118W<br>20% Exceed 1018KB +<br>20% FT6230 | 40% FB2230<br>40% FK1820<br>20% FT6230 | 40% FB2230<br>40% FK1820<br>20% FT6230 |
| Core Layer (**B**) | 75% Sabic 118W<br>25% FT6230 | 60% FB1350 +<br>30% FK1828 +<br>10% FT6230 | 60% FB1350<br>30% FK1828<br>10% FT6230 |
| Inner Layer (**C**) | 80% Exceed 1018KB<br>20% FT6236 | 80% FK1828<br>20% FT6236 | 80% FK1828<br>20% FT6236 |
| **Structure of the Print Film** | | | |
| | CE2 | IE2 | IE3 |
| Ratio layer thickness | 1:2:1 (25%/50%/25%) | 1:2:1 (25%/50%/25%) | 1:2:1 (25%/50%/25%) |
| Outer Layer (**E**) | 60% FK1820<br>30% FB2230<br>10% FT6236 | 60% FK2715<br>30% FB2230<br>10% FT6236 | 60% FK2715<br>30% FB2230<br>10% FT6236 |
| Core Layer (**F**) | 85% FB5600<br>15% FK1820 | 85% FB5600<br>15% FK2715 | 85% FB5600<br>15% FK2715 |
| Inner Layer (**G**) | 60% FK1828<br>30% FB2235<br>10% FT6236 | 60% FK2715<br>30% FB2235<br>10% FT6236 | 60% FK2715<br>30% FB5600<br>10% FT6236 |

The polymers used for making the films according to the invention and of the comparative examples are given below.

Table 2: Properties of the polymers used in the examples.

| Resin Name | Producer | Type | MFR$_2$ (g/ 10 min) | Density (kg/m$^3$) | Slip & anti-block additives |
|---|---|---|---|---|---|
| Anteo FK2715 | Borouge | Bimodal 1-butene,1-hexene ethylene terpolymer | 1.3 | 927 | No |
| Anteo FK1820 | Borouge | Bimodal 1-butene,1-hexene ethylene terpolymer | 1.5 | 918 | No |
| Anteo FK1828 | Borouge | Bimodal 1-butene,1-hexene ethylene terpolymer | 1.5 | 918 | Yes |
| Borstar FB1350 | Borouge | Bimodal MDPE | 0.15 | 935 | No |
| Borstar FB2230 | Borouge | Bimodal LLDPE | 0.25 | 923 | No |
| Borstar FB2235 | Borouge | Bimodal LLDPE | 0.25 | 923 | Yes |

(continued)

| Resin Name | Producer | Type | MFR$_2$ (g/ 10 min) | Density (kg/m$^3$) | Slip & anti-block additives |
|---|---|---|---|---|---|
| Borstar FB5600 | Borouge | Bimodal 1-butene ethylene copolymer | 0.7 | 960 | No |
| FT6230 | Borouge/ Borealis | Tubular LDPE | 2.0 | 923 | No |
| FT6236 | Borouge/ Borealis | Tubular LDPE | 2.0 | 923 | Yes |
| Exceed 1018KB | Exxon Mobile | Unimodal LLDPE: 1-hexene ethylene copolymer | 1.0 | 918 | Yes |
| Sabic 118W | Saudi Basic Industries Corp. (SABIC) | Unimodal LLDPE: 1-butene ethylene copolymer | 1.0 | 918 | Yes |

**Experimental**

No specific stretching units were used for the film preparation, and thus, films were produced on standard blown and/or cast film line through the standard film machine system (nip roller or take-off rollers and winders) and can be referred as "non-oriented film". The films may be formed by any suitable method either by a blown film and/or cast film process and the materials forming each layer may be coextruded through a co-extrusion feedblock and die assembly to yield a film with three or more layers adhered together but differing in composition.

Any polyethylene blend used in the above described print film layers can be produced by any suitable conventional multi-layer film extrusion line, preferably at a temperature of 150 to 230 °C, more preferably 160 to 225°C. Conventional blown film production techniques used in this regard, which in principle are known and available to the skilled person. Typically each film layers are coextruded at a temperature in the range of from 160 to 225 °C and cooled by blowing air at a temperature of 12 to 16 °C, to provide a frost line height of 1 or 2 times of the diameter of the die.

Blown films were produced on a Polyrema (Reifenhauser blown film line with internal bubble cooling system) having an output of 150 kgs/hr and cooling air temperature were in between 12 to 16°C. The details as listed in Table 3.

Table 3: Blown film line parameters.

| Blown film line parameters | |
|---|---|
| Die diameters | 180 mm |
| Die gap | 1.8 mm |
| Blow up ratio (BUR) | 2.5 : 1 |
| Bubble cooling | IBC |
| Cooling air temperature | 14 °C |
| Corona treatment | 44 dynes |

Tables 4 and 5 lists the temperature profiles of the blown film line for the sealant and print film, respectively, i.e., the melt temperatures used for different layers of the blown film extruders and respective melt pressures. The films were produced using standard co-extrusion machines for polyethylene, but each film used a slightly different process condition in order to optimize film aesthetics and deliver stable production of films.

Table 4: Processing parameters of the sealant film.

| Sealant Film | CE1 | IE1 |
|---|---|---|
| Outer Layer (A) extruder temperature Melt temperature (°C) Melt pressure (bar) | 194 242 | 202 246 |
| Core Layer (B) extruder temperature | | |

(continued)

| Sealant Film | CE1 | IE1 |
|---|---|---|
| Melt temperature (°C) | 209 | 214 |
| Melt pressure (bar) | 251 | 299 |
| Inner Layer (C) extruder temperature<br>Melt temperature (°C)<br>Melt pressure (bar) | <br>202<br>278 | <br>201<br>222 |
| Die temperature (°C) | 215 | 215 |

Table 5: Processing parameters of the print film.

| Print Film | CE2 | IE2 | IE3 |
|---|---|---|---|
| Outer Layer (E) extruder temperature<br>Melt temperature (°C)<br>Melt pressure (bar) | <br>213<br>223 | <br>212<br>239 | <br>212<br>236 |
| Core Layer (F) extruder temperature<br>Melt temperature (°C)<br>Melt pressure (bar) | <br>209<br>263 | <br>207<br>272 | <br>207<br>274 |
| Inner Layer (G) extruder temperature<br>Melt temperature (°C)<br>Melt pressure (bar) | <br>211<br>219 | <br>212<br>232 | <br>212<br>211 |
| Die temperature (°C) | 215 | 215 | 215 |

Table 6 lists the temperature profiles of the blown film line i.e., the temperatures used for different layers of the blown film extruders at different locations of the blown film line.

Table 6: Temperature profiles (°C)

| Layer (sealant film CE1) | Extruder zone 1 | Extruder zone 2 | Extruder zone 3 | Extruder zone 4 | Extruder zone 5 | Extruder zone 6 | Post Extruder zone 7 | Post Extruder zone 8 |
|---|---|---|---|---|---|---|---|---|
| Outer Layer (A) | 160 | 190 | 195 | 195 | 195 | 195 | 195 | 195 |
| Core Layer (B) | 160 | 190 | 210 | 210 | 210 | 210 | 210 | 210 |
| Inner Layer (C) | 160 | 190 | 195 | 200 | 200 | 200 | 200 | 200 |
| Die (zones) | 215 | 215 | 215 | 215 | 215 | 215 | - | - |
| Layer (sealant film IE1) | Extruder zone 1 | Extruder zone 2 | Extruder zone 3 | Extruder zone 4 | Extruder zone 5 | Extruder zone 6 | Post Extruder zone 7 | Post Extruder zone 8 |
| Outer Layer (A) | 160 | 190 | 200 | 200 | 200 | 200 | 200 | 200 |
| Core Layer (B) | 160 | 190 | 215 | 215 | 215 | 215 | 215 | 215 |
| Inner Layer (C) | 160 | 190 | 200 | 200 | 200 | 200 | 200 | 200 |
| Die (zones) | 215 | 215 | 215 | 215 | 215 | 215 | - | - |

(continued)

| Layer (sealant film IE1) | Extruder zone 1 | Extruder zone 2 | Extruder zone 3 | Extruder zone 4 | Extruder zone 5 | Extruder zone 6 | Post Extruder zone 7 | Post Extruder zone 8 |
|---|---|---|---|---|---|---|---|---|
| | | | | | | | | |
| Layer (substrate film CE2) | Extruder zone 1 | Extruder zone 2 | Extruder zone 3 | Extruder zone 4 | Extruder zone 5 | Extruder zone 6 | Post Extruder zone 7 | Post Extruder zone 8 |
| Outer Layer (E) | 160 | 190 | 200 | 210 | 210 | 210 | 210 | 210 |
| Core Layer (F) | 160 | 190 | 210 | 210 | 210 | 210 | 210 | 210 |
| Inner layer (G) | 160 | 190 | 200 | 210 | 210 | 210 | 210 | 210 |
| Die (zones) | 215 | 215 | 215 | 215 | 215 | 215 | - | - |
| | | | | | | | | |
| Layer (substrate film IE2/ IE3 ) | Extruder zone 1 | Extruder zone 2 | Extruder zone 3 | Extruder zone 4 | Extruder zone 5 | Extruder zone 6 | Post Extruder zone 7 | Post Extruder zone 8 |
| Outer Layer (E) | 160 | 190 | 200 | 210 | 210 | 210 | 210 | 210 |
| Core Layer (F) | 160 | 190 | 210 | 210 | 210 | 210 | 210 | 210 |
| Inner Layer (G) | 160 | 190 | 200 | 210 | 210 | 210 | 210 | 210 |
| Die (zones) | 215 | 215 | 215 | 215 | 215 | 215 | - | - |

## Rotogravure Printing Process

All the print films of Table 1 were printed on a BOBST Rotomec 4003, 10-color rotogravure printing machine. Winder tensions were optimized to run 27 $\mu$m PE films and tension of 4 to 6 bar was employed for smooth operation. The unwinding tension was kept very close to the winding tension of 4 to 6 bar and adjusted when reverse printed at a (high) speed of above 200 meters/min.

## Laminate Preparation

After rotogravure printing, the reverse printed print substrate film and the sealant film were laminated using a solvent-less adhesive system from Henkel Corporation. Lamination was done on a Nordmeccanica solvent-less laminator at a running speed of 250 meters/min with an adhesive of 1.7 g/m$^2$.

## VFFS Packaging Trials

The Vertical Form Fill Sealing (VFFS) machine used for producing the flexible pouches was a Poly Heat Seal (PHS) machine from Pace packaging (model - Pace P250 4S). The operating parameters are provided in Table 7.

Table 7: VFFS operating parameters for the laminate films.

| Laminate Film | CE3 | IE4 and IE5 |
|---|---|---|
| Vertical seal jaw temperature | 130 to 135 °C | 130 to 135 °C |
| Seal design | Serrated 5-seal lines | Serrated 5-seal lines |

(continued)

| | | |
|---|---|---|
| Horizontal seal bar temperature | 120 to 124 °C | 113 to 122 °C |
| Pouch production speed | 40 to 50 pouches/min | 50 to 80 pouches/min |
| Seal time (mili seconds) | 200 to 350 ms | 150 to 250 ms |
| Cooling air | Ambient temperature | Ambient temperature |

**Properties of the films**

The laminate films were tested for several properties, including barrier properties, mechanical strength and optical properties. The results are shown in Table 8 and discussed in the context of the sealant film and print film properties.

Table 8: Laminate film properties.

| Laminate Film Properties | | Method | CE3 | IE4 | IE5 |
|---|---|---|---|---|---|
| Thickness ($\mu$m) | | ISO 4593 | 75.2 | 75.3 | 75.5 |
| Tensile modulus (1% secant modulus), MPa | | ASTM D882 | | | |
| | MD | | 331 | 452 | 474 |
| | TD | | 446 | 649 | 659 |
| Tensile Stress at break, MPa | | ISO 527-3 | | | |
| | MD | | 31.2 | 51.2 | 53.4 |
| | TD | | 22.7 | 29.2 | 30.0 |
| Elongation at break, % | | ISO 527-3 | | | |
| | MD | | 515 | 458 | 452 |
| | TD | | 615 | 624 | 593 |
| Elmendorf Tear strength, N | | ASTM D1922 | | | |
| | MD | | 2.0 | 2.6 | 2.6 |
| | TD | | 22.4 | 27.4 | 26.1 |
| Dart Drop Impact, g | | ASTM D1709 Method A | 198 | 252 | 246 |
| Haze, % | | ASTM D1003 | 10.5 | 10.6 | 10.8 |
| Gloss at 60 ° (inner layer C) | | ISO 2813 | 106 | 106 | 107 |
| Gloss at 60 ° (outer layer G) | | ISO 2813 | 104 | 103 | 100 |
| Coefficient of Friction (in/in or C/C) | | ISO 8295 | 0.24 | 0.28 | 0.29 |
| Coefficient of Friction (out/out or G/G) | | ISO 8295 | 0.39 | 0.38 | 0.42 |
| Heat Seal of layer C: Seal initiation temperature at 5 N force, °C | ASTM F2029, ASTM F88 | | **101.1** | **100.2** | **100.0** |
| Heat Seal of layer G: Seal initiation temperature at 5 N force, °C | ASTM F2029, ASTM F88 | | **105.7** | **113.0** | **116.7** |
| **Delta SIT ($\triangle$SIT)** | | | **4.6** | **12.8** | **16.7** |
| WVTR, g/m$^2$/day | | ASTM F1249 | 4.37 | 2.74 | 2.63 |
| OTR, cm$^3$/m$^2$/day | | ISO 15105-2 | 2150 | 1334 | 1260 |

The properties of the sealant and print films of the laminate are shown below.

Table 9: Sealant film properties (45 µm PE films).

| Sealant Film Properties | | Method | CE1 | IE1 |
|---|---|---|---|---|
| Thickness (µm) | | ISO 4593 | 45 | 45 |
| Tensile modulus (1% secant modulus), MPa | | ASTM D882 | | |
| | MD | | 242 | 361 |
| | TD | | 295 | 467 |
| Tensile Stress at break, MPa | | ISO 527-3 | | |
| | MD | | 37.1 | 49.7 |
| | TD | | 29.1 | 39.5 |
| Elongation at break, % | | ISO 527-3 | | |
| | MD | | 491 | 467 |
| | TD | | 695 | 698 |
| Elmendorf Tear strength, N | | ASTM D1922 | | |
| | MD | | 0.6 | 1.0 |
| | TD | | 11.5 | 14.5 |
| Dart Drop Impact, g | | ASTM D1709 Method A | 196 | 246 |
| Haze, % | | ASTM D1003 | 5.4 | 6.8 |
| Gloss at 60 ° (inner layer C) | | ISO 2813 | 111 | 112 |
| Gloss at 60 ° (outer layer A) | | ISO 2813 | 115 | 120 |
| Coefficient of Friction (in/in or C/C) | ISO 8295 | | 0.14 | 0.26 |
| Coefficient of Friction (out/out or A/A) | ISO 8295 | | 0.15 | 0.30 |
| Heat Seal of layer C: | ASTM F2029, ASTM F88 | | | |
| Seal initiation temperature at 5 N force, °C | | | 101.2 | 92.0 |
| Maximum seal force, N | | | 19.6 | 22.0 |
| Hot Tack of layer C: | ASTM F1921 | | | |
| Hot tack temperature at 1 N force, °C | | | 100.0 | 85.3 |
| Maximum hot tack force, N | | | 2.4 | 3.7 |
| WVTR, g/m$^2$/day | | ASTM F1249 | 11.5 | 6.05 |
| OTR, cm$^3$/m$^2$/day | | ISO 15105-2 | >4000 | 2775 |

As can be observed in Table 9, the IE1 sealant film has improved mechanical (tensile modulus, tensile strength, tensile stress at break, dart drop impact, tear resistance) and optical properties (haze and gloss) over the comparative CE1 sample.

The higher 1% secant modulus (of 300 to 500 MPa) shown in Table 9 indicates that the IE1 sealant film has improved stiffness capabilities than the CE1 sealant film, meaning that the IE1 film requires more energy input to deform the film to the same relative extent. This is more suitable for the produced laminate film.

Both tensile properties and dart drop impact (DDI) of the IE1 sealant film are significantly high along with good optical properties and these results in general are designed to maintain high mechanical performance of the laminate films.

The Coefficient of friction (COF) of both external layers are measured at dynamic condition and they are below 0.5, hence they are suitable for use in the subsequent steps, lamination and FFS operations.

The IE1 sealant film shows a 30% to 40% reduction of the water vapor transmission rate (WVTR), i.e. a better moisture barrier performance than the CE1 film.

The sealing behavior of the IE1 sealant film is demonstrated in Figure 2 by the lower seal initiation temperature and lower hot tack temperature, i.e. a seal initiation temperature at 5 N of less than or equal to about 95 °C, and a hot tack seal initiation temperature at 1 N of less than or equal to about 90 °C, which reflect the performance in seal integrity. The sealing behavior of the IE1 sealant film can improve the overall performance of the laminate film, as lower SIT of the sealing layer is very essential for creating the difference of SIT or heat resistance between sealing layer and the print film top layer, and provides advantages during the packaging operations on the VFFS machines (higher packaging speed while the films are in use for VFFS packaging applications).

Once the sealant film is laminated with substrate, the SIT of sealing layer C in the laminates has increased to a slightly higher temperature (close to 100 °C) as overall thickness of laminate is higher than of the single sealant film.

Thus, the IE1 sealing layer has improved sealing properties over the CE1 sealing layer, meaning that the IE1 sealant film requires less energy input to create the same strength seal than the CE1 sealant film. This is significantly beneficial while using the (laminate) films on the packaging line operations at packing speed of 50 to 80 pouches/min.

Table 10: Print film properties (27 $\mu$m PE films).

| Print Film Properties | | Method | CE2 | IE2 | IE3 |
|---|---|---|---|---|---|
| Thickness ($\mu$m) | | ISO 4593 | 27 | 27 | 27 |
| Tensile modulus (1% secant modulus), MPa | | ASTM D882 | | | |
| | MD | | 539 | 622 | 664 |
| | TD | | 695 | 801 | 852 |
| Tensile Stress at break, MPa | | ISO 527-3 | | | |
| | MD | | 47.4 | 60.4 | 60.9 |
| | TD | | 36.8 | 37.9 | 39.8 |
| Elongation at break , % | | ISO 527-3 | | | |
| | MD | | 515 | 520 | 550 |
| | TD | | 722 | 731 | 750 |
| Elmendorf Tear strength, N | | ASTM D1922 | | | |
| | MD | | 0.5 | 0.3 | 0.3 |
| | TD | | 8.9 | 10.0 | 9.2 |
| Dart Drop Impact, g | | ASTM D1709 | 65 | 33 | 33 |
| | | Method A | | | |
| Haze, % | | ASTM D1003 | 7.0 | 7.1 | 7.2 |
| Gloss at 60 ° (inner layer G) | | ISO 2813 | 112 | 110 | 107 |
| Gloss at 60 ° (outer layer E) | | ISO 2813 | 111 | 111 | 116 |
| Coefficient of Friction (in/in or G/G) | | ISO 8295 | 0.33 | 0.35 | 0.39 |
| Coefficient of Friction (out/out or E/E) | | ISO 8295 | 0.36 | 0.38 | 0.43 |
| Heat Seal of layer G: | | ASTM F2029, ASTM F88 | | | |
| Seal initiation temperature at 5 N force, °C | | | 105.6 | 113.0 | 116.8 |
| Maximum seal force, N | | | 15.6 | 16.0 | 14.8 |
| WVTR, g/m$^2$/day | | ASTM F1249 | 9.20 | 7.48 | 7.16 |
| OTR, cm$^3$/m$^2$/day | | ISO 15105-2 | 3930 | 3150 | 2910 |

Referring to Table 10, higher tensile modulus (1% secant modulus) and also higher tensile strength were obtained for the IE2 and IE3 print films as compared to the comparative CE2 print film. The film properties obtained using the described formulation it can be noted that the secant modulus at 1% (MD) of the IE2 and IE3 print films is in the range of 620 to 660 MPa, indicating a high stiffness and providing an excellent body to fulfil the requirements of high speed printing operation as well as to improve the overall stiffness of laminate films and hence facilitates to run the laminate films on higher packaging speed.

Improved barrier performance (WVTR and OTR) are reported for the IE2 and IE3 print films, as well as good optical properties (haze and gloss).

The seal initiation temperature at 5 N of inner layers of the IE2 and IE3 is increased when compared to the CE2 sample.

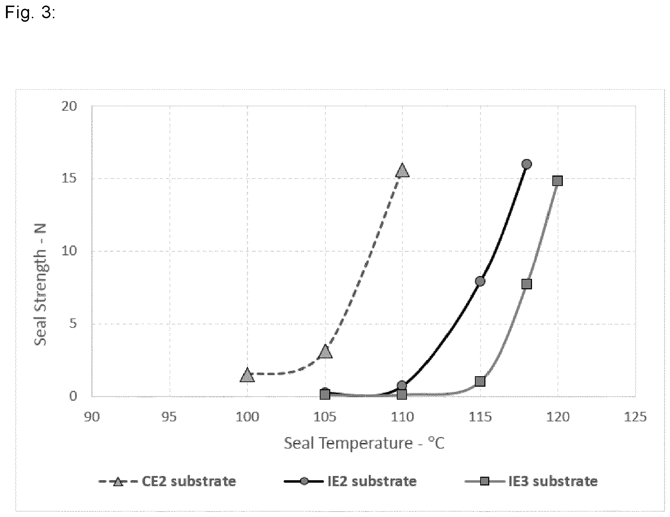

Figure 3 indicated that the inventive polyethylene substrates have improved heat resistance (seal initiation temperature at 5 N of inner layers of the IE2 and IE3 is increased when compared to the CE2 sample, and being in the range of 110 to 120 °C) which helped to create a higher delta SIT ($\Delta$SIT). Delta SIT ($\Delta$SIT) is calculated as the difference of seal initiation temperature (SIT) of print film layer G to the seal initiation temperature (SIT) of sealant film layer C. Thus, the IE2 and IE3 films can withstand high temperature of top vertical sealing bar of FFS packaging machine and also create a high delta SIT (between the outer and inner laminate surface).

**Claims**

1. A polyethylene laminate film comprising an inner surface and an outer surface and comprising:

   a) a print film comprising an outer layer E, a core layer F and an inner layer G, wherein the inner layer G forms the outer surface of the laminate film, and wherein the inner layer G is made of an inner layer G composition comprising a component AG, which is an ethylene copolymer having a density of 920 to 935 kg/m$^3$ and a melt flow rate (MFR$_2$) of 0.5 to 2.0 g/10min, determined according to ISO 1133; and
   b) a sealant film comprising an outer layer A, a core layer B and an inner layer C, wherein the inner layer C forms the inner surface of the laminate film, and wherein the inner layer C is made of an inner layer C composition comprising at least one ethylene polymer;

   wherein the outer layer A of the sealant film is laminated to the outer layer E of the print film, and
   wherein the seal initiation temperature (SIT) at 5 N of the outer surface of the laminate film is at least 10 °C higher than the seal initiation temperature at 5 N of the inner surface of the laminate film, the seal initiation temperature being determined according to ASTM F2029 and ASTM F88.

2. The polyethylene laminate film according to claim 1, wherein the seal initiation temperature (SIT) at 5 N of the outer surface of the laminate film is from 110 to 125 °C and/or the seal initiation temperature at 5 N of the inner surface of the laminate film is from 85 to 105 °C, the seal initiation temperature being determined according to ASTM F2029 and ASTM F88.

3. The polyethylene laminate film according to any one of the preceding claims, wherein the inner layer G composition of the print film comprises the component AG in an amount of 50 to 75 wt.%, based on the total weight of the inner layer G composition; and/or the inner layer C composition of the sealant film comprises a component AC, which is a linear low density ethylene polymer having a density of 915 to 925 kg/m$^3$ and a melt flow rate (MFR$_2$) of 0.5 to 2.0 g/10 min, determined according to ISO 1133, preferably in an amount of 60 to 90 wt.%, based on the total weight of the inner layer C composition, wherein the density of the component AC is lower than the density of the component AG.

4. The polyethylene laminate film according to claim 3, wherein the inner layer G composition of the print film further comprises a component BG1, which is a linear low density ethylene polymer having a density of 915 to 930 kg/m$^3$ and a melt flow rate (MFR$_2$) of 0.05 to 1.0 g/10 min, determined according to ISO 1133; and/or a component BG2, which is a high density ethylene polymer having a density of 950 to 970 kg/m$^3$ and a melt flow rate (MFR$_2$) of 0.2 to 2.0 g/10 min, determined according to ISO 1133, preferably comprises any or each of the components BG1 and BG2 in an amount of 15 to 45 wt.%, based on the total weight of the inner layer G composition.

5. The polyethylene laminate film according to any one of claims 3 and 4, wherein any or all of the components AC, AG and BG2 is/are a bimodal ethylene copolymer, preferably wherein any or both of the components AC and AG is/are a copolymer of ethylene and at least two different C4 to C12 alpha-olefin monomers.

6. The polyethylene laminate film according to any one of claims 3 to 5, wherein the inner layer C composition of the sealant film further comprises a component BC, which is a low density polyethylene having a density of 918 to 928 kg/m$^3$ and a melt flow rate (MFR$_2$) of 1.5 to 2.5 g/10 min, determined according to ISO 1133, preferably in an amount of 10 to 30 wt.%, based on the total weight of the inner layer C composition.

7. The polyethylene laminate film according to any one of the preceding claims, wherein the core layer F of the print film is made of a core layer F composition comprising a component AF, which is a high density ethylene polymer having a density of 950 to 970 kg/m$^3$ and a melt flow rate (MFR$_2$) of 0.2 to 2.0 g/10 min, determined according to ISO 1133, preferably in an amount of up to 90 wt.%, based on the total weight of the core layer F composition.

8. The polyethylene laminate film according to claim 7, wherein the core layer F composition of the print film further comprises a component BF, which is an ethylene copolymer having a density of 920 to 935 kg/m$^3$ and a melt flow rate (MFR$_2$) of 0.5 to 2.0 g/10 min, determined according to ISO 1133, preferably in an amount of 5 to 40 wt.%, based on the total weight of the core layer F composition.

9. The polyethylene laminate film according to any one of the preceding claims, wherein the core layer B of the sealant film is made of a core layer B composition comprising a component AB, which is a medium density polyethylene having a density of 925 to 945 kg/m$^3$ and a melt flow rate (MFR$_2$) of 0.05 to 0.50 g/10 min, determined according to ISO 1133, preferably in an amount of 40 to 75 wt.%, based on the total weight of the core layer B composition; and/or a component BB, which is a linear low density ethylene polymer having a density of 915 to 925 kg/m$^3$ and a melt flow rate (MFR$_2$) of 0.5 to 2.0 g/10 min, determined according to ISO 1133, preferably in an amount of 20 to 40 wt.%, based on the total weight of the core layer B composition.

10. The polyethylene laminate film according to any one of the preceding claims, wherein the outer layer A of the sealant film is made of an outer layer A composition comprising a component AA, which is a linear low density ethylene polymer having a density of 915 to 930 kg/m$^3$ and a melt flow rate (MFR$_2$) of 0.05 to 1.0 g/10 min, determined according to ISO 1133; and/or a component BA, which is a linear low density ethylene polymer having a density of 915 to 925 kg/m$^3$ and a melt flow rate (MFR$_2$) of 0.5 to 2.0 g/10 min, determined according to ISO 1133, preferably comprising any or each of the components AA and BA in an amount of 30 to 50 wt.%, based on the total weight of the outer layer A composition.

11. The polyethylene laminate film according to any one of the preceding claims, wherein one or more of the following criteria is/are met:

   a) the laminate film and/or the sealant film and/or the print film has/have a haze value of less than 12 %, determined according to ASTM D1003;
   b) the laminate film and/or the sealant film and/or the print film has/have a gloss value of at least 80, determined at 60 ° at the respective inner layer C/G or outer layer A/E according to ISO2813;
   c) the tensile modulus (1% secant) in machine direction (MD) of the sealant film is from 280 to 500 MPa and/or of the print film is from 500 to 1000 MPa and/or of the laminate film is from 400 to 800 MPa, determined according to ASTM D882; and
   d) the laminate film has a water vapor transmission rate (WVTR) of not greater than 5 g/m$^2$/d, determined according to ASTM F-1249, 37.8 °C, 90 % RH, and optionally an oxygen transmission rate (OTR) of not greater than 2000 cm$^3$/m$^2$/d, determined according to ISO 15105-2, 23 °C, 0 % RH.

12. The polyethylene laminate film according to any one of the preceding claims, wherein the print film has a thickness of 15 to 40 µm and the sealant film has a thickness of 35 to 120 µm, and wherein each of the print film and the sealant film comprises up to seven layers and is produced by a blown film or cast film process and preferably is a non-oriented film, and optionally the laminate film comprises an adhesive layer between the outer layer A of the sealant film and the outer layer E of the print film.

13. A sealant film comprising an outer layer A, a core layer B and an inner layer C, wherein the inner layer C is made of an inner layer C composition comprising:

   a) a component AC, which is a linear low density ethylene polymer having a density of 915 to 925 kg/m$^3$ and a melt flow rate (MFR$_2$) of 0.5 to 2.0 g/10 min, determined according to ISO 1133; and
   b) a component BC, which is a low density polyethylene having a density of 918 to 928 kg/m$^3$ and a melt flow rate (MFR$_2$) of 1.5 to 2.5 g/10 min, determined according to ISO 1133, preferably in an amount of 10 to 30 wt.%, based on the total weight of the inner layer C composition; and

   wherein at least one of the following criteria is/are met:

   c) the core layer B is made of a core layer B composition comprising a component AB, which is a medium density polyethylene having a density of 925 to 945 kg/m$^3$ and a melt flow rate (MFR$_2$) of 0.05 to 0.50 g/10 min, determined according to ISO 1133, preferably in an amount of 40 to 75 wt.%, based on the total weight of the core layer B composition; and

d) the outer layer A is made of an outer layer A composition comprising a component AA, which is a linear low density ethylene polymer having a density of 915 to 930 kg/m$^3$ and a melt flow rate (MFR$_2$) of 0.05 to 1.0 g/10 min, determined according to ISO 1133, preferably in an amount of 30 to 50 wt.%, based on the total weight of the outer layer A composition.

14. An article comprising the polyethylene laminate film according to any one of claims 1 to 12 or the sealant film according to claim 13.

15. Use of the polyethylene laminate film according to any one of claims 1 to 12 or the sealant film according to claim 13 for packaging of an article.

Fig. 1:

| G (inner layer of print film) |
|---|
| F (core layer of print film) |
| E (outer/printing layer of print film) |

Outer surface of laminate

Print film

**D** Adhesive layer

| A (outer layer of sealant film) |
|---|
| B (core layer of sealant film) |
| C (inner/sealing layer of sealant film) |

Sealant film

Inner surface of laminate

Fig. 2:

Fig. 3:

Europäisches
Patentamt

European
Patent Office

Office européen
des brevets

## EUROPEAN SEARCH REPORT

Application Number

EP 21 20 9821

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/043561 A1 (RONG JIASHAO [CN] ET AL) 16 February 2017 (2017-02-16)<br>* abstract; claims 1-16 *<br>* paragraph [0057] *<br>* paragraphs [0069], [0071] *<br>* paragraph [0025] *<br>* paragraph [0034] *<br>* paragraphs [0042], [0046] *<br>----- | 1-15 | INV.<br>B32B7/10<br>B32B27/08<br>B32B27/30<br>B32B27/32<br>C08J5/18 |
| X | WO 2019/005930 A1 (DOW GLOBAL TECHNOLOGIES LLC [US]) 3 January 2019 (2019-01-03)<br>* abstract; claims 1-15 *<br>* paragraphs [0024], [0088] *<br>----- | 1-15 | |

TECHNICAL FIELDS
SEARCHED     (IPC)

B32B
C08J

The present search report has been drawn up for all claims

| Place of search | Date of completion of the search | Examiner |
|---|---|---|
| The Hague | 8 April 2022 | Bergmans, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 9821

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2022

| Patent document cited in search report | | Publication date | Patent family member(s) | | Publication date |
|---|---|---|---|---|---|
| US 2017043561 | A1 | 16-02-2017 | CN 107921760 | A | 17-04-2018 |
| | | | EP 3408094 | A1 | 05-12-2018 |
| | | | PH 12018500311 | A1 | 13-08-2018 |
| | | | US 2017043561 | A1 | 16-02-2017 |
| | | | WO 2017024576 | A1 | 16-02-2017 |
| WO 2019005930 | A1 | 03-01-2019 | AR 112359 | A1 | 23-10-2019 |
| | | | BR 112019026262 | A2 | 30-06-2020 |
| | | | CN 110770017 | A | 07-02-2020 |
| | | | EP 3645271 | A1 | 06-05-2020 |
| | | | ES 2881182 | T3 | 29-11-2021 |
| | | | JP 2020526409 | A | 31-08-2020 |
| | | | PL 3645271 | T3 | 29-11-2021 |
| | | | US 2021331845 | A1 | 28-10-2021 |
| | | | WO 2019005930 | A1 | 03-01-2019 |

EPO FORM P0459

For more details about this annex : see Official Journal of the European Patent Office, No. 12/82

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- WO 2018187438 A
- WO 2016083208 A
- WO 2004000933 A1
- WO 2020109289 A
- WO 2017055174 A
- WO 2017021389 A1
- WO 2019081611 A